(19) Europäisches Patentamt / European Patent Office / Office européen des brevets

(11) EP 2 119 160 B1

(12) **EUROPÄISCHE PATENTSCHRIFT**

(45) Veröffentlichungstag und Bekanntmachung des Hinweises auf die Patenterteilung:
**14.07.2010 Patentblatt 2010/28**

(21) Anmeldenummer: **08708475.2**

(22) Anmeldetag: **30.01.2008**

(51) Int Cl.:
***H04L 27/26*** *(2006.01)*

(86) Internationale Anmeldenummer:
**PCT/EP2008/051160**

(87) Internationale Veröffentlichungsnummer:
**WO 2008/092916 (07.08.2008 Gazette 2008/32)**

(54) **VERFAHREN UND VORRICHTUNG ZUM SENDEN EINES SENDESIGNALS, INSBESONDERE EINES MOBILFUNKSIGNALS**

METHOD AND DEVICE FOR SENDING A TRANSMISSION SIGNAL, IN PARTICULAR A MOBILE RADIO SIGNAL

PROCÉDÉ ET DISPOSITIF D'ÉMISSION D'UN SIGNAL ÉMETTEUR, EN PARTICULIER D'UN SIGNAL DE RADIOTÉLÉPHONIE MOBILE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.01.2007 EP 07002016**

(43) Veröffentlichungstag der Anmeldung:
**18.11.2009 Patentblatt 2009/47**

(73) Patentinhaber: **Nokia Siemens Networks GmbH & Co. KG**
**81541 München (DE)**

(72) Erfinder:
- **BAUMGARTNER, Bernd**
  **89537 Giengen-Burgberg (DE)**
- **JELONNEK, Björn**
  **89079 Ulm (DE)**
- **SPLETT, Armin**
  **89079 Ulm (DE)**
- **WOLFF, Gunter**
  **89081 Ulm (DE)**

(56) Entgegenhaltungen:
**WO-A-2004/006464 US-A- 6 038 261**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 119 160 B1

## Beschreibung

Die Erfindung betrifft ein Verfahren zum Senden eines Sendesignals, insbesondere eines Mobilfunksignals, an einen Empfänger gemäß Anspruch 1 und eine entsprechende Vorrichtung gemäß Anspruch 4.

In modernen Mobilfunkstandards werden höherwertige Modulationsverfahren, wie beispielsweise QPSK (Quadrature Phase Shift Keying), 8PSK (Phase Shift Keying) oder 16QAM (Quadrature Amplitude Modulation) verwendet. Bei diesen Modulationsverfahren werden Symbole mit mehr als zwei möglichen Informationszuständen übertragen. Hierbei wird auf die Konstanz der momentanen Sendeleistung zugunsten höherer Datenübertragungsraten verzichtet.

Eine noch stärkere Variation der momentanen Sendeleistung wird durch den Einsatz von Mehrfachträgersystemen hervorgerufen. Bei Mehrfachträgersystemen, wie beispielsweise OFDM-(Orthogonal Frequency Division Multiplexing) und OFDMA- (Orthogonal Frequency Division Multiple Access) basierten Mobilfunkstandards oder Multi-Carrier-GSM (Global System for Mobile Communication), werden mehrere modulierte Einzelträger zu einem Gesamtsignal zusammengefasst.

Je nach Modulationsverfahren und Kombination der Einzelträger kann daher bei den Mehrfächträgersystemen die maximale augenblickliche Leistung eines Sendesignals wesentlich über dem Mittelwert der Sendeleistung liegen. Das Verhältnis von maximaler zu mittlerer Sendeleistung wird als Peak to Average Ratio (PAR) oder Peak to Average Power Ratio (PAPR) bezeichnet (PAR > 1 und PAPR > 1).

Bei höherem PAR muss der Sendeverstärker eines Sendesystems beträchtliche Aussteuerreserven vorhalten, um nichtlineare Verzerrungen des Sendesignals beispielsweise aufgrund von Begrenzungs (Clipping)-Effekten zu vermeiden. Dadurch erhöhen sich die Komplexität und der Leistungsverbrauch des Verstärkers; zudem verringert sich der Wirkungsgrad des Gesamtsystems. Das begrenzt wiederum die verfügbare Sendeleistung und Reichweite der Sendeeinrichtung.

Zur Reduktion der Spitzenleistung können Verfahren eingesetzt werden, bei denen die Amplitude von Signalspitzen begrenzt wird (Clipping). Hierdurch wird dem Signal ein Fehler hinzugefügt, der umso größer ist, je stärker die Spitzenleistung reduziert wird. Solche Reduktionsverfahren können durch intelligente Übertragungsmodi unterstützt werden, in denen gezielt Übertragungskapazität so freigehalten oder mit nicht nutzbaren Signalen belegt wird, dass das PAR sinkt.

Um die Anforderungen an den Sendeverstärker zu begrenzen, ist aus der DE 102 19 318 A1 ein Verfahren zur Bildung eines trägerfrequenten Ausgangssignals aus n Teilsignalen eines Basisfrequenzbands bekannt, bei dem jedes einzelne der n Teilsignale jeweils einem Hauptzweig als Eingangssignal zugeordnet und amplitudenbegrenzt, gefiltert und in ein zwischenfrequentes Teilsignal umgewandelt wird. Die zwischenfrequenten n Teilsignale werden als Ausgangssignale der Hauptzweige zu einem gemeinsamen Summensignal zusammengefasst. Das Summensignal wird amplitudenbegrenzt, digital-analog gewandelt und in das trägerfrequente Ausgangssignal umgesetzt. Zusätzlich gelangt jedes Teilsignal in einen Nebenzweig, mit dessen Hilfe zu erwartende Signalüberhöhungen des Teilsignals im entsprechenden Hauptzweig als Schätzwerte ermittelt werden. Mit Hilfe der Schätzwerte werden im Hauptzweig die dort jeweils durchgeführten Amplitudenbegrenzungen der entsprechenden Teilsignale gesteuert. Aus WO 2004/006464 A1 ist bekannt, dass eine Reduzierung des PAR eine Erhöhung der durchschnittlichen Sendeleistung ermöglicht.

US-A-6 038 261 hingegen, offenbart, dass eine Reduzierung des PAR ein verkleinertes Signal zu Rauschverhältnis am Empfänger bewirkt."

Eine Aufgabe der vorliegenden Erfindung ist es nun, ein Verfahren und eine Vorrichtung zum Senden eines Sendesignals, insbesondere eines Mobilfunksignals, an einen Empfänger vorzuschlagen, deren Datendurchsatz und Reichweite erhöht sein kann.

Diese Aufgabe wird durch ein Verfahren zum Senden eines Sendesignals, insbesondere eines Mobilfunksignals, gemäß Anspruch 1 und eine entsprechende Vorrichtung gemäß Anspruch 4 gelöst. Weitere Ausgestaltungen der Erfindung ergeben sich aus den abhängigen Ansprüchen.

Ein wesentlicher Gedanke der Erfindung besteht darin, dass die verfügbare Sendeleistung vergrößert werden kann, wenn das PAR des Sendesignals durch Clipping verringert wird. Einerseits reduziert eine höhere Sendeleistung den Einfluss einer Rausch- und Störleistungen auf der Empfängerseite, andererseits vergrößert Clipping die Signalfehlerleistung vom Sender. Beide Effekte haben einen gegensätzlich wirkenden Einfluss auf das Gesamt-C/I (Carrier-to-Interference; Nutzsignal-Stör-Abstand) auf der Empfängerseite. Die Erfindung schlägt nun vor, diese Tatsache für eine Optimierung zu nutzen, insbesondere für eine bedarfsgerechte Anpassung eines Grenzwerts (EVM) für einen Fehler des Sendesignals an Übertragungsbedingungen für das Sendesignal. Der Grenzwert ist also nach der Erfindung nicht fest vorgegeben, sondern kann flexibel, entsprechend den aktuellen Übertragungsdingungen oder -anforderungen ermittelt und angepasst werden. Die Übertragungsbedingungen, insbesondere Funkbedingungen können mittels Übertragungsfaktoren, wie beispielsweise Priorität eines Kanals, Auslastung einer Funkzelle, Empfangsbedingungen oder garantierte minimale Datenraten charakterisiert werden. Diese Bedingungen können sich während des Betriebes der Vorrichtung zum Senden fortlaufend ändern. Mit Hilfe eines optimal angepassten EVM bzw. des daraus resultierenden Verhältnis von maximaler zu mittlerer Sendeleistung (PAR) kann die Sendeleistung in einem größeren Umfang variiert werden. Dadurch können unvermeidbare Störungen gezielter verteilt und vermeidbare Störungen verringert werden. Außerdem lassen sich, sofern stärkere Störungen möglich sind, höhere Reichweiten oder Datenraten erzielen und, sofern bereits ohne Probleme hohe Datenraten erzielt werden können, geringere Störungen erreichen. Auch kann das Sendesignal so angepasst werden, dass ein Signal-Rausch-Abstand des Sendesignals an einem Empfänger, der das Sendesignal empfängt, optimiert ist.

Der erfindungsgemäße Ansatz ermöglicht den Einsatz leistungsärmerer und damit kostengünstigerer Verstärker im Sender. Trotz des Einsatzes solcher Verstärker lässt sich, im Vergleich zu bekannten Systemen, die gleiche mittlere Ausgangsleistung ohne störende Einbußen der Signalqualität erzielen.

Bei dem von der erfindungsgemäßen Vorrichtung bereitgestellten Sendesignal kann es sich um ein Sendesignal eines Mehrfachträgersystems handeln, in dem höherwertige Modulationsverfahren, wie beispielsweise QPSK, 8PSK oder 16QAM mit mehr als zwei möglichen Informationszuständen pro Sendesymbol verwendet werden. Das Sendesignal kann eine Mehrzahl von Unterträgern aufweisen. Signale der Unterträger können separat voneinander in ihrer Sendeleistung geregelt und begrenzt werden. Begrenzung eines Signals im Sinne der vorliegenden Erfindung bedeutet, dass Spitzenwerte des Signals und somit das Verhältnis von maximaler zu mittlerer Sendeleistung des Signals reduziert werden. Das reduzierte Signal entspricht somit dem ursprünglichen Signal, kann jedoch in der Amplitude und in der Sendeleistung reduziert sein.

Gemäß einer Ausführungsform der Erfindung ist ein Verfahren zum Senden eines Sendesignals, insbesondere eines Mobilfunksignals, an einen Empfänger, bei dem
das Sendesignal gemäß einem Modulations-Codierungs-Schema MCS verarbeitet und einer Amplitudenbegrenzung zum Erzielen eines Verhältnisses von maximaler zu mittlerer Sendeleistung PAR unterzogen wird, und bei dem
ein Grenzwert EVM für einen Fehler des Sendesignals bedarfsgerecht an Übertragungsbedingungen für das Sendesignal derart angepasst wird, dass ein maximaler Nutzsignal-Stör-Abstand C/I an einem Empfänger erzielt wird.

Gemäß einer weiteren Ausführungsform der Erfindung kann eine Übertragungsbedingung ein zu maximierender Nutzsignal-Stör-Abstand C/I am Empfänger bei einem fest vorgegebenem Spitzenwert-Rausch-Abstand PNR sein und der optimale Grenzwert für einen Fehler des Sendesignals EVM wie folgt ermittelt werden:

a) Ermitteln der Abhängigkeit des Fehlers des Sendesignals EVM vom vorgegebenen Verhältnis von maximaler zu mittlerer Sendeleistung PAR beim Sender,

b) Bestimmen des maximalen Nutzsignal-Stör-Abstands C/I am Empfänger und des dazugehörigen Fehlers des Sendesignals $EVM^2$ für einen beliebigen, festen Wert des Spitzenwert-Rausch-Abstands $PNR_{PX}$ am Empfänger,

c) Zuordnen des aus der Optimierung in b) erhaltenen Fehlers des Sendesignals $EVM^2$ als Grenzwert zum maximalen Nutzsignal-Stör-Abstand C/I am Empfänger , und

d) Wiederholen der Schritte b) und c) für verschiedene Werte des Spitzenwert-Rausch-Abstands $PNR_{RX}$.

Gemäß einer weiteren Ausführungsform der Erfindung wird die Auslastung einer Funkzelle mit einem Parameter Load L=0%...100% abgeschätzt, um entsprechende Maßnahmen für eine Zugangssteuerung (Admission Control), eine Überlaststeuerung (Congestion Control) oder eine Ablaufsteuerung (Scheduling) zu entscheiden, und der Parameter Load kann verwendet werden, um den Grenzwert für einen Fehler $EVM_{TX}$ des Senders vorzugeben.

Gemäß einer weiteren Ausführungsform der Erfindung kann der Grenzwert für einen Fehler $EVM_{TX}$ des Senders sich gemäß der Formel

$$EVM_{TX} = EVM_{TX,0} + (EVM_{TX,100} - EVM_{TX,0}) \times (L / 100\%),$$

ergeben, wobei $EVM_{TX,0}$ und $EVM_{TX,100}$ für den zulässigen Grenzwert für einen Fehler EVM bei minimaler Last beziehungsweise maximaler Last stehen.

Eine weitere Ausführungsform der Erfindung betrifft eine Vorrichtung zum Senden eines Sendesignals an einen Empfänger, umfassend

- einen Leistungsregler zum Regeln einer Sendeleistung eines Zwischenfrequenzsignals abhängig von einem Leistungsparameter;
- einen Begrenzer zum Begrenzen der Sendeleistung des Zwischenfrequenzsignals abhängig von einem Begrenzungsparameter, wobei aus dem Zwischenfrequenzsignal das Sendesignal erzeugbar ist;
- eine Überwachungseinheit, die ausgebildet ist, um gemäß einer Optimierungsvorschrift einen Grenzwert für einen Fehler des Sendesignals abhängig von Übertragungsfaktoren zu bestimmen und aus dem Grenzwert zumindest den Leistungsparameter so zu bestimmen, dass das Sendesignal an den Grenzwert angepasst ist.

Gemäß einer Ausführungsform der Erfindung kann die Überwachungseinheit ausgebildet sein, um neben dem Leistungsparameter auch den Begrenzungsparameter so zu bestimmen, dass das Sendesignal an den Grenzwert angepasst ist. Indem sowohl die Regelung der Sendeleistung als auch die Begrenzung der Sendeleistung des Sendesignals abhängig von dem Grenzwert erfolgt, kann das Sendesignal noch exakter an die jeweiligen Übertragungskanäle, insbesondere Funkverbindungen mit ihren entsprechenden Übertragungsfaktoren angepasst werden.

Gemäß einer weiteren Ausführungsform der Erfindung kann die Vorrichtung zum Senden ferner einen Modulator aufweisen, der ausgebildet ist, um ein Basisbandsignal abhängig von einem Modulationsparameter zu modulieren und als das Zwischenfrequenzsignal bereitzustellen, wobei die Überwachungseinheit ferner ausgebildet ist, um den Modulationsparameter aus dem Grenzwert zu bestimmen. Neben der Modulation kann eine Codierung durchgeführt werden. Eine Steuerung der Modulation und Codierung des Sendesignals abhängig von dem Grenzwert bietet eine weitere Möglichkeit das Sendesignal an den jeweiligen Übertragungskanal, insbesondere die jeweilige Funkverbindung anzupassen.

Die Vorrichtung kann ferner einen Digital-Analog-Wandler, einen Aufwärtsmischer und einen Sendeverstärker aufweisen, um das Sendesignal aus dem Zwischenfrequenzsignal zu erzeugen.

Die Optimierungsvorschrift kann darauf basieren, dass sich eine relative Fehlerenergie an dem Empfänger aus der Formel

$$1/(C/I)_{min} > 1/(C/I) = 1/SNR_{RX} + EVM_{TX}^2$$

ergibt und dass $SNR_{RX}$ ,der Signal-Rausch-Abstand am Empfänger für Fehler, die nicht von der Vorrichtung zum Senden stammen, direkt mit einer mittleren Sendeleistung des Sendesignals skaliert. Dabei ist $(C/I)_{min}$ der mindestens erforderliche Nutzsignal-Stör-Abstand, $SNR_{PX}$ der Signal-Rausch-Abstand am Empfänger und $EVM_{TX}$ der Fehlergrenzwert in der Vorrichtung zum Senden. Durch die Anpassung dieses Fehlergrenzwertes lässt sich der Signal-Rausch-Abstand des Sendesignals am Empfänger optimieren.

Gemäß einer Ausführungsform kann die mittlere Sendeleistung des Sendesignals einer der Übertragungsfaktoren sein und die Optimierungsvorschrift kann eine Reduzierung des Grenzwerts bei einer Reduzierung der mittleren Sendeleistung und eine Erhöhung des Grenzwerts bei einer Erhöhung der mittleren Sendeleistung bewirken.

Gemäß der Optimierungsvorschrift kann der Grenzwert zum Erreichen einer minimalen Sendeleistung des Sendesignals bei einem vorgegebenen Nutzsignal-Stör-Abstand gemäß der Formeln

$$EVM_{TX} = EVM_{Analog},$$

und

$$1/(C/I) = 1/SNR_{RX} + EVM_{Analog}^2$$

bestimmbar sein. Dabei ist $EVM_{Analog}$ der Grenzwert in einem Analogteil der Vorrichtung zum Senden.

Gemäß einer weiteren Ausführungsform kann der Grenzwert gemäß der Optimierungsvorschrift zum Erreichen eines maximalen Nutzsignal-Stör-Abstands bei einem vorgegebenen Spitzen-Rausch-Abstand gemäß der Formel

$$1/(C/I) = 1/SNR_{RX} + EVM^2 = PAR_{TX}/PNR_{RX} + EVM_{TX}^2$$

bestimmbar sein. Dabei ist $PAR_{TX}$ das Verhältnis von maximaler zu mittlerer Sendeleistung und $PNR_{RX}$ der Spitzen-Rausch-Abstand der Signalleistung am Empfänger.

Gemäß einer weiteren Ausführungsform kann die Überwachungseinheit zum Bestimmen einer Abhängigkeit des Quadrats des Grenzwertes $EVM^2$ von einem erforderlichen Nutzsignal-Stör-Abstand C/I ausgebildet sein, um in einem ersten Schritt eine Abhängigkeit des Quadrats des Grenzwertes von einem Verhältnis von maximaler zu mittlerer Sendeleistung $EVM^2(PAR)$ bei der Vorrichtung zum Senden zu ermitteln, in einem zweiten Schritt einen maximalen Nutzsignal-Stör-Abstand C/I für einen vorgegebenen Spitzen-Rausch-Abstand-Wert am Empfänger ($PNR_{RX}$-Wert) zu bestimmen, in einem dritten Schritt das Quadrat des Grenzwertes zum Signal-Rausch-Abstand aus der Bestimmung im zweiten Schritt zuzuordnen und in einem vierten Schritt den zweiten und dritten Schritt für verschiedene Spitzen-Rausch-Abstand-Werte am Empfänger zu wiederholen. Eine solche Optimierung ist dann zweckmäßig, wenn bei schlechten Empfangsbedingungen oder Diensten hoher Priorität die Sendeleistung erhöht werden soll.

Die Überwachungseinheit kann mit einem Speicher koppelbar sein, wobei der Speicher einen Zusammenhang zwischen dem Verhältnis von maximaler zu mittlere Sendeleistung PAR und dem Grenzwert für den maximal zulässigen Fehler des Sendesignals EVM sowie Werte für einen zugehörigen maximalen Signal-Rausch-Abstand aufweisen kann. Ferner kann der Speicher Begrenzungsparameter zum Bereitstellen an den Begrenzer aufweisen.

Ferner kann die Vorrichtung eine Verwaltungseinheit zur Abschätzung einer Auslastung einer Funkzelle, in der die Vorrichtung zum Senden angeordnet ist, aufweisen, wobei die Auslastung ein Übertragungsfaktor ist und die Verwaltungseinheit ausgebildet ist, um die Auslastung and die Überwachungseinheit bereitzustellen. Dementsprechend kann der Grenzwert unter Einbeziehung der Formel

$$EVM_{TX} = EVM_{TX,0} + (EVM_{TX,100} - EVM_{TX,0}) \times (L / 100\%),$$

bestimmbar sein. Dabei ist $EVM_{TX,0}$ der zulässiger Grenzwert bei minimaler Làst, $EVM_{TX,100}$ der zulässige Grenzwert bei maximaler Last und L die Auslastung der Funkzelle. Auf diese Weise lässt sich der Grenzwert schnell an wechselnde Funkbedingungen anpassen.

Gemäß einer Ausführungsform kann der Modulator ausgebildet sein, um eine Mehrzahl von Basisbandsignalen abhängig von einer Mehrzahl von Modulationsparametern zu modulieren und als eine Mehrzahl von Zwischenfrequenzsignalen bereitzustellen. Ferner kann die Überwachungseinheit ausgebildet sein, um die Mehrzahl von Modulationsparametern aus dem Grenzwert zu bestimmen. Die Vorrichtung kann einen Kombinierer aufweisen, der ausgebildet ist, um die Mehrzahl von Zwischenfrequenzsignalen zu kombinieren und als Zwischenfrequenzsignal an den Leistungsregler bereitzustellen. Dies ist vorteilhaft bei einer Verwendung der Vorrichtung zum Senden in einem Mehrfachträgersystem, bei dem mehrere modulierte Einzelträger zu einem Gesamtsignal zusammengefasst werden.

Gemäß einer weiteren Ausführungsform kann die Vorrichtung zum Senden eine Mehrzahl von Leistungsreglern zum Regeln jeweils einer Sendeleistung der Mehrzahl von Zwischenfrequenzsignalen abhängig von einer Mehrzahl von Leistungsparametern aufweisen. Ferner kann die Überwachungseinheit ausgebildet sein, um aus dem Grenzwert die Mehrzahl von Leistungsparametern zu bestimmen. Dadurch lassen sich einzelne Teilsignale des Sendesignals individuell an die Übertragungsbedingungen, insbesondere Funkbedingungen anpassen.

Gemäß einer alternativen Ausführungsform der Erfindung kann die Vorrichtung einen Kombinierer aufweisen, der ausgebildet ist, um die Mehrzahl von Zwischenfrequenzsignalen zu kombinieren und als Zwischenfrequenzsignal an den Begrenzer bereitzustellen. Der Begrenzer kann den Begrenzungsparameter bereits aufweisen. In diesem Fall ist es nicht erforderlich, dass die Überwachungseinheit den Begrenzungsparameter bereitstellt. Ferner kann der Begrenzer ausgebildet sein, um jeweils eine Sendeleistung der Mehrzahl von Zwischenfrequenzsignalen abhängig von einer Mehrzahl von Begrenzungsparametern zu begrenzen und eine Mehrzahl von Sendesignalen bereitzustellen.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:

Fig. 1 ein Diagramm mit Simulationsergebnissen verschiede- ner C/I (EVM) -Kurven bei einem angenommen $EVM_{anal}$ von 2%;

Fig. 2 ein Diagramm mit Simulationsergebnissen verschiede- ner C/I (EVM) -Kurven bei einem angenommen $EVM_{anal}$ von 3,5%;

Fig. 3 ein Blockschaltbild einer Vorrichtung gemäß einem Ausführungsbeispiel der Erfindung;

Fig. 4 ein Blockschaltbild einer Vorrichtung gemäß einem weiteren Ausführungsbeispiel der Erfindung;

Fig. 5 ein Blockschaltbild einer Vorrichtung gemäß einem weiteren Ausführungsbeispiel der Erfindung;

Fig. 6 ein Blockschaltbild einer Vorrichtung gemäß einem weiteren Ausführungsbeispiel der Erfindung;

Fig. 7 ein erstes Flussdiagramm der Einstellung von Para- metern einer Mobilfunk-Sendeeinrichtung mit einer Optimierung gemäß der Erfindung;

Fig. 8 ein zweites Flussdiagramm der Einstellung von Para- metern einer Mobilfunk-Sendeeinrichtung mit einer Optimierung gemäß der Erfindung; und

Fig. 9 ein Flussdiagramm der Einstellung von Parametern einer Mobilfunk-Sendeeinrichtung gemäß dem Stand der Technik.

Im Folgenden können gleiche und/oder funktional gleiche Elemente mit dem gleichen Bezugszeichen versehen sein. Absolute Größenangaben sind nur beispielhafte Angaben und sind nicht als einschränkend für die Erfindung auszulegen. Die in der folgenden Beschreibng bei einigen Angaben verwendeten Indizes RX und TX bedeuten Sender-bzw- Empfänger-seitig.

Bei Übertragungsverfahren der Nachrichtentechnik kann insbesondere im jeweiligen Mobilfunkstandard in Abhängigkeit des verwendeten Modulations-und-Codierungs-Schemas (MCS) ein Grenzwert für einen maximal zulässigen Fehler des Sendesignals (EVM: error vector magnitude bzw. RCE: relative constellation error) angegeben werden. Dieser Grenzwert basiert auf einem mindestens erforderlichen Nutzsignal-Stör-Abstand $(C/I)_{min}$ für den Empfang eines Signals mit dem verwendeten MCS und berücksichtigt zusätzlich eine gewisse Marge M für beispielsweise durch Rauschen oder Interferenz hervorgerufene Fehler, die nicht vom Sender stammen. Diese Marge M kann ein fester Betrag, beispielsweise ein Faktor 10 sein (entspricht 10 dB), und der maximal zulässige Fehler des Sendesignals kann gemäß den folgenden Formeln ermittelt werden:

$$EVM^2 = 1/((C/I)_{min} \bullet M) \text{ bzw. } RCE = 1/((C/I)_{min} \bullet M).$$

Alternativ kann die Marge auch eine gewisse Randbedingung enthalten. Eine solche Randbedingung kann beispielsweise darin bestehen, dass sich der theoretisch zu erwartende (fehlerfreie bzw. fehlerkorrigierte) Datendurchsatz bei einem bestimmten Nutzsignal-Stör-Abstand C/I durch Auftreten von EVM bzw. RCE nur um höchstens 5% verschlechtern soll.

$$EVM^2 = 1/(C/I)_{95\%} - 1/(C/I)_{100\%}.$$

Dabei entsprechen $(C/I)_{100\%}$ dem 100%-igen Datendurchsatz und $(C/I)_{95\%}$ den um 5% verschlechterten. In den obigen Formeln handelt es sich um eine lineare Leistung (nicht in dB).

Am Empfänger des Sendesignals ergibt sich folgende relative Fehlerenergie:

$$1/(C/I)_{min} > 1/(C/I) = 1/SNR_{RX} + EVM_{TX}^2$$

Für Fehler, die nicht vom Sender stammen, skaliert $SNR_{PX}$ direkt mit der Sendeleistung. Mit anderen Worten erzeugt ein "lautes" Sendesignal, beispielsweise ein mit hoher Sendeleistung ausgesandtes Mobilfunksignal ein größeres $SNR_{RX}$ als ein "leises" Sendesignal, beispielsweise ein mit niedriger Sendeleistung ausgesandtes Mobilfunksignal. Ferner ist die maximal mögliche (mittlere) Sendeleistung umgekehrt proportional zum PAR, d.h. ein großes PAR bedeutet eine relativ geringe (mittlere) Sendeleistung, da hohe Peaks im Sendesignal auftreten, wogegen ein kleines PAR nahe 1 eine hohe (mittlere) Sendeleistung ermöglicht, da nur kleine Peaks im Sendesignal auftreten. Schließlich kann ein möglichst kleines PAR erzielt werden, wenn EVM bzw. RCE im Sendesignal möglichst hoch sein darf.

Dies wird nun nach der Erfindung ausgenutzt, um das SNR bzw. C/I (Carrier to Interference), das für ein bestimmtes MCS erforderlich ist, auf der Empfängerseite zu optimieren. Hierbei werden die unterschiedlichen Beiträge berücksichtigt, aus denen sich $EVM_{TX}^2$ auf der Empfängerseite zusammensetzt (anstelle von $EVM^2$ kann auch RCE

stehen):

$$EVM_{TX}^2 = EVM_{Clip}^2 + EVM_{Analog}^2$$

Während der aufgrund des analogen Senderverstärkers erzeugte Fehler $EVM_{Analog}$ näherungsweise als Konstante betrachtet werden kann, ergibt sich der durch das Clipping erzeugte Fehler $EVM_{Clip}$ direkt aus der Begrenzung des Sendesignals und hängt vom erzielten PAR ab.

Gemäß der Erfindung können nun die EVM - Werte den jeweiligen Funkverbindungen bedarfsgerecht angepasst werden. Bei guten Empfangsbedingungen oder Diensten niedriger Priorität genügt eine niedrige Sendeleistung, die andere Funkverbindungen weniger stört. Hier wird der Spielraum für ein hohes PAR und damit niedriges EVM ausgenutzt, den diese niedrige Sendeleistung bietet, damit sich das C/I verbessert.

Erster Optimierungsansatz

Daher ist ein erster Optimierungsansatz darauf ausgelegt, eine minimale Sendeleistung bei einem festem C/I zu erreichen. Dieser Ansatz hat zur Folge, dass $1/SNR_{PX}$ groß wird. Somit bleibt bei einem festen 1/(C/I) fast kein Spielraum mehr für $EVM_{TX}^2$. Dies führt zu einem großen PAR. Im Grenzfall gilt:

$$EVM_{TX} = EVM_{Analog}$$

und

$$1/(C/I) = 1/SNR_{RX} + EVM_{Analog}^2$$

Der erste Optimierungsansatz ist dann zweckmäßig, wenn die betreffende Funkverbindung andere Funkverbindungen minimal stören soll. Dies ist beispielsweise möglich, wenn aufgrund guter Empfangsbedingungen die Sendeleistung abgesenkt werden kann.

Zweiter Optimierungsansatz

Bei schlechten Empfangsbedingungen oder Diensten hoher Priorität kann die Sendeleistung, bei gegebener Spitzenleistung, erhöht werden. Bei einem fest vorgegebenen Spitzenwert-zu-Rausch-Verhältnis (PNR: peak to noise ratio) der Leistung am Empfänger kann das EVM auf minimales 1/(C/I) optimiert werden.

Daher ist ein zweiter Optimierungsansatz darauf ausgelegt, dass 1/(C/I) bei festem PNR minimal werden soll. Die Formel für den zweiten Optimierungsansatz ergibt sich aus

$$1/(C/I) = 1/SNR_{RX} + EVM^2 = PAR_{TX}/PNR_{RX} + EVM_{TX}^2$$

Der zweite Optimierungsansatz basiert auf einem Verfahren, bei dem die folgenden Schritte durchgeführt werden:

a) Ermitteln der Abhängigkeit $EVM^2$ (PAR) beim Sender

b) Optimierung: Bestimmung des minimalen 1/(C/I) für einen beliebigen, festen $PNR_{RX}$ -Wert

c) Zuordnung des $EVM^2$ zum C/I aus der Optimierung in b)

d) Wiederholung der Schritte b) und c) für verschiedene $PNR_{RX}$ -Werte

Mit diesem Verfahren lässt sich die Abhängigkeit des $EVM^2$ von dem erforderlichen C/I ermitteln, wobei auf minimales 1/(C/I) für eine Funkverbindung optimiert ist. Entsprechende Einrichtungen zum Durchführen des Verfahrens können in der Überwachungseinrichtung zur Bestimmung des Grenzwertes hardwaremäßig oder softwaremäßig realisiert sein.

Die Erhöhung der Sendeleistung führt zu einem kleineren PAR und somit größerem EVM und ermöglicht bis zum, im zweiten Optimierungsansatz bestimmten EVM - Grenzwert, eine Verbesserung des C/I. Ein noch größerer EVM - Wert als der im zweiten Optimierungsansatz bestimmte Grenzwert kann zu einer Verschlechterung des C/I führen.

Nach Durchführung eines der Optimierungsverfahren kann eine bedarfsgerechte Anpassung jeder Funkverbindung durch eine entsprechende Wichtung der $EVM_{Clip}$ - Werte, die aus dem ersten oder zweiten Optimierungsverfahren bestimmt wurden, erfolgen. Aus dem EVM - Wert oder den EVM - Werten können über die Leistungsparameter die mittlere Sendeleistung und über die Begrenzungsparameter die Begrenzung des Sendesignals bestimmt werden.

Dritter Optimierungsansatz

Zusätzlich kann in eine Wichtung der $EVM_{Clip}$ - Werte die Auslastung der Funkzelle einfließen. Dies kann mittels einem dritten Optimierungsansatz erfolgen. Alternativ kann der dritte Optimierungsansatz auch eigenständig und für das gesamte Sendesignal vorgenommen werden. Gemäß dem dritten Optimierungsansatz werden die Radio Ressourcen einer Funkzelle in einer zentralen Einheit des Radio-Zugriff-Systems (Radio Access Systems) verwaltet. Bei den Radio Ressourcen kann es sich z.B. um eine Steuerung (Scheduler) oder um eine Radio Ressourcen Verwaltung (Radio Resource Management) handeln. Die zentrale Einheit schätzt üblicherweise die Auslastung der Funkzelle mit einem Parameter Load (L=0%...100%) ab, um entsprechende Maßnahmen für eine Zugangssteuerung (Admission Control), eine Überlaststeuerung (Congestion Control) oder eine Ablaufsteuerung (Scheduling) zu entscheiden.

Erfindungsgemäß kann der Parameter L nun zusätzlich verwendet werden, um das $EVM_{TX}$ des Senders vorzugeben. Ein einfacher Algorithmus dafür ist zum Beispiel

$$EVM_{TX} = EVM_{TX,0} + (EVM_{TX,100} - EVM_{TX,0}) \times (L / 100\%),$$

wobei $EVM_{TX,0}$ und $EVM_{TX,100}$ für das zulässige EVM bei minimaler Last beziehungsweise maximaler Last stehen.

Die beschriebenen Optimierungsansätze zur Bestimmung der EVM - Werte sowie der Modulationsparameter, der Leistungsparameter und der Begrenzungsparameter können in der Fig. 3 gezeigten Überwachungseinheit 132 durchgeführt werden.

Detaillierte Beschreibung des zweiten Optimierungsansatzes Im Folgenden wird nun der zweite Optimierungsansatz nochmals detailliert erläutert. Unter der Annahme eines Senders (TX) mit Clipping kann ein bestimmter EVM und PAR beobachtet werden. EVM beschreibt das Verhältnis zwischen dem Fehler $S_E$ und der Signalamplitude $S_S$ am Senderausgang und kann anhand der entsprechenden Leistungswerte $P_E$ und $P_S$ wie folgt berechnet werden:

$$EVM = \sqrt{P_E / P_S} ,$$

wobei PAR das Peak ($P_P$) to Average ($P_S$) Ratio der TX-Signalleistung ist:

$$PAR = P_P / P_S$$

Beim Empfänger (RX) kommt das TX-Signal multipliziert mit der Übertragungskanaldämpfung A an. Das Verhältnis zwischen dieser ankommenden Signalleistung und der RX-Rausch- und Interferenzleistung $P_N$ von allen Quellen außer der entsprechenden TX-Quelle wird als Signal-Rausch-Abstand SNR bezeichnet.

$$SNR = A \cdot P_S / P_N$$

Angenommen, dass keine Korrelation zwischen Rauschquellen besteht, kann das Gesamt-RX-C/I anhand der folgenden Gleichung berechnet werden:

$$\frac{1}{C/I} = A \cdot P_E \,/(A \cdot P_S) + P_N \,/(A \cdot P_S) = EVM^2 + 1/SNR$$

Das Ziel ist nun eine Maximierung von C/I.

Aus der obigen Gleichung ist offensichtlich, dass für einen konstanten EVM eine maximale TX-Signalleistung $P_{S,max}$ das C/I maximiert. Wird die Tatsache vorausgesetzt, dass die Spitzenleistung auf einen Maximalwert $P_{P,max}$ begrenzt wird, definiert PAR die maximal erreichbare (durchschnittliche) TX-Signalleistung $P_{S,max}$.

$$P_{S,max} = P_{P,max} \,/\, PAR$$

Durch Einstellen des maximalen Peak-to-Noise-Ratio PNR am Empfänger auf

$$PNR = A \cdot P_{P,max} \,/\, P_N$$

wird folgendes erhalten:

$$\frac{1}{C/I\ (max)} =$$

$$EVM^2 + P_N \,/(A \cdot P_{S,max}) = EVM^2 + P_N \,/(A \cdot P_{P,max} \,/\, PAR) = EVM^2 + PAR/PNR$$

Es werden nun zwei EVM-Quellen angenommen: eine konstante analoge Komponente $EVM_{anal}$ und eine Komponente $EVM_{clip}$, die vom aktuellen Clipping-Pegel abhängt. Da das PAR auch vom Clipping-Pegel abhängt, besteht eine Beziehung zwischen PAR und $EVM_{clip}$.

$$EVM^2 = EVM_{anal}{}^2 + EVM_{clip}{}^2$$

$$PAR = PAR(EVM_{clip})$$

Dies resultiert in einer Gleichung, in der C/I maximiert werden kann.

$$C/I(EVM) = \frac{1}{EVM_{anal}{}^2 + EVM_{clip}{}^2 + PAR(EVM_{clip})/PNR}$$

Simulationsergebnisse auf Basis der obigen Berechnungen sind in den Fig. 1 und 2 gezeigt.

Fig. 1 und 2 zeigt mehrere Kurven C/I(EVM), jede für einen bestimmten PNR-Wert. Diese Kurven wurden aus PAR = PAR($EVM_{clip}$) Simulationsergebnissen unter der Annahme berechnet, dass $EVM_{anal}$ = 2% (Fig. 1) bzw. 3,5% (Fig. 2) ist für jeden Clipping-Pegel.

Die abfallenden Linien 10 und 12 in Fig. 1 bzw. 2 verbindet die einzelnen Maxima der Kurven C/I(EVM) und kennzeichnet den optimalen Bereich. Ein EVM, das größer oder kleiner als der Wert der Linie 10 oder 12 ist, würde einen kleineres C/I für ein gegebenes PNR ergeben. Die C/I-Abweichung ist jedoch nicht groß innerhalb eines Bereichs von wenigen dB um das optimale EVM.

Nichtsdestotrotz machen EVM-Werte, die größer als das Optimum sind, keinen Sinn, solange ein höheres EVM mit einem geringeren PAR und mit einer höheren Leistung assoziiert ist. Eine höhere Leistung verbessert nicht nur nicht weiter das C/I, sondern es vergrößert auch Inter- (und Intra-) Zelleninterferenz und -strahlung. Daher stellt die Linie 10 bzw. 12 eine Empfehlung für das obere EVM-Limit für ein gegebenes C/I dar.

In dem Simulationsbeispiele für $EVM_{analog}$ = 2% ergibt sich das optimale Verhältnis zwischen C/I und EMV wie folgt:

$$EVM_{opt}\ [dBc] = -(C/I\ [dB] + 8)$$

Das resultierende SNR-Erfordernis lautet:

$$SNR_{opt}[dB] = C/I[dB] + 0.75$$

Das Beispiel für $EVM_{anal}$ = 3.5% (Fig. 2) zeigt ein unterschiedliches Verhalten. Hier neigt der EVM dazu, größer im 2%-Fall (Fig. 1) zu sein, insbesondere für höhere C/I-Werte. Dies resultiert in einer größeren durchschnittlichen TX-Leistung und ein wenig härteren SNR-Anforderungen.

Ausführungsbeispiele verschiedener Vorrichtungen gemäß der Erfindung

Fig. 3 zeigt nun ein Blockschaltbild einer Vorrichtung zum Senden gemäß einem Ausführungsbeispiel der vorliegenden Erfindung. Insbesondere zeigt Fig. 3 eine Sendeeinrichtung mit störungsoptimierter Einstellung der mittleren Ausgangsleistung für jede einzelne Funkverbindung. Gezeigt ist dabei eine stark vereinfachte Prinzipdarstellung der erfindungsgemäßen Sendeeinrichtung. Insbesondere wurde auf Details im Hinblick auf das Filtern und Aufwärtsmischen sowie im Hinblick auf die Mehrfachzugriffsverfahren, beispielsweise Kanalspreizung oder IFFT, verzichtet. Solche Details können im Sinne der vorliegenden Erfindung unterschiedlich ausgeführt sein.

Die Vorrichtung zum Senden ist ausgebildet, um eine Mehrzahl von individuellen Basisbanddaten zu empfangen und zu verarbeiten. Gemäß diesem Ausführungsbeispiel ist die Vorrichtung ausgebildet, um Basisbanddaten von n Leitungen oder Links zu empfangen. Die Vorrichtung ist ferner ausgebildet, um die verarbeiteten Basisbanddaten in Form eines Sendesignals auszusenden. Das Sendesignal kann über einen Übertragungskanal, beispielsweise eine Funkverbindung übertragen werden und von einem Empfänger (nicht gezeigt in den Figuren) empfangen und ausgewertet werden.

Die Vorrichtung weist eine Modulations- und Kodiereinrichtung 102, eine Mehrzahl von Leistungsreglern 104, einen Begrenzer 106, einen Kombinierer 108, einen Digital-Analog-Wandler 110, einen Aufwärtsmischer 112 und einen Verstärker LPA 114 auf. Zudem weist die Vorrichtung eine Leistungssteuerung 122, eine Begrenzersteuerung 124 und eine Überwachungseinheit 132 auf, die mit einem Speicher 134 und einer Verwaltungseinheit 136 gekoppelt ist.

Die Modulationseinrichtung 102 ist ausgebildet, um die Basisbanddaten 1-n zu empfangen, zu modulieren und als Zwischenfrequenzsignale auszugeben. Ferner kann die Modulationseinrichtung 102 ausgebildet sein, um die Basisbanddaten zu kodieren. Die Modulationseinrichtung 102 ist ausgebildet, um Modulationsparameter und Codierparameter von der Überwachungseinheit 132 zu empfangen und die Basisbanddaten basierend auf den empfangenen Parametern zu kodieren.

Die Vorrichtung weist für jedes Zwischenfrequenzsignal einen Leistungsregler 104, also insgesamt n Leistungsregler 104 auf. Jeder Leistungsregler 104 ist ausgebildet, um eine Sendeleistung des zugehörigen Signals zu regeln. Dazu ist jeder Leistungsregler 104 ausgebildet, um von der Leistungssteuerung 122 einen oder eine Mehrzahl von Leistungsparameter zu empfangen, die einen Wert der Sendeleistung des zugehörigen Signals definieren. Die Leistungssteuerung 122 ist ausgebildet, um die Leistungsparameter an alle Leistungsregler 104 bereitzustellen. Die Leistungsparameter der unterschiedlichen Leistungsregler 104 können identisch oder aber unterschiedlich sein, das heißt individuell an jeden Unterträger angepasst sein. Die Leistungssteuerung 122 ist ausgebildet, um die Leistungsparameter von der Überwachungseinheit 132 zu empfangen. Alternativ kann die Leistungssteuerung 122 ausgebildet sein, um von der Überwachungseinheit 132 Werte zu empfangen, aus denen die Leistungssteuerung 122 die Leistungsparameter ermitteln kann.

Der Begrenzer 106 ist ausgebildet, um die Zwischenfrequenzsignale von den Leistungsreglern 104 zu empfangen und in ihrer Amplitude zu begrenzen. Dazu kann der Begrenzer 106 einen so genannten Clipping-Algorithmus aufweisen, der die Zwischenfrequenzsignale basierend auf Begrenzungsparametern begrenzt. Der Begrenzer 106 ist ausgebildet, um die Begrenzungsparameter von der Begrenzungsteuerung 124 zu empfangen. Die Begrenzungsteuerung 124 ist wiederum ausgebildet, um die Begrenzungsparameter von der Überwachungseinheit 132 zu empfangen. Alternativ kann die Begrenzungsteuerung 124 ausgebildet sein, um Werte von der Überwachungseinheit 132 zu empfangen, aus denen die Begrenzungsteuerung 124 wiederum die Begrenzungsparameter ermitteln kann. Die Begrenzungsparameter definieren wie stark die Zwischenfrequenzsignale begrenzt werden.

Der Kombinierer 108 ist ausgebildet, um die begrenzten Zwischenfrequenzsignale von dem Begrenzer 106 zu empfangen und zu einem Gesamtsignal zu kombinieren. Bei dem Kombinierer 108 kann es sich um ein Addierer handeln.

Der Digital-Analog-Wandler 110 ist ausgebildet, um das Gesamtsignal von dem Kombinierer 108 zu empfangen und digitalanalog zu wandeln. Der Aufwärtsmischer 112 ist ausgebildet, um das digitalisierte Gesamtsignal von dem Digital-Analog-Wandler 110 zu empfangen, aufwärts zu mischen und an den Verstärker 114 bereitzustellen. Der Verstärker 114 ist ausgebildet, um das Sendesignal an eine Sendeantenne bereitzustellen, mittels der das Sendesignal ausgesendet werden kann.

Die Überwachungseinheit 132 kann als Radio-Ressourcen-Verwaltung bzw. Radio-Ressourcen-Steuerung ausgeführt sein. Die Überwachungseinheit 132 verfügt über einen Zugriff auf den Speicher 134 sowie auf die Verwaltungseinheit 136. Der Speicher 134 kann als Nachschlagetabelle LUT ausgeführt sein. In der Nachschlagetabelle kann ein Zusammenhang von PAR und EVM sowie die Werte für ein zugehöriges maximales C/I gespeichert sein, inklusive MCS, EVM(RCE) und PAR(PAPR). Außerdem kann die Tabelle entsprechende Parameter für den Clipping-Algorithmus des Begrenzers 106 enthalten. Die Verwaltungseinheit 136 kann wichtige Einflussfaktoren, wie Priorität, Auslastung der Funkzelle, den Empfangsbedingungen oder garantierte minimale Datenraten enthalten.

In Abhängigkeit von den Übertragungsfaktoren, die in dem Speicher 134 sowie der Verwaltungseinheit 136 gespeichert sind, kann die Überwachungseinheit 132 die optimalen Parameter für Modulation und Codierung, Sendeleistung und Begrenzung ermitteln. Dadurch kann ein Sendesignal erzeugt werden, das unter den gegebenen Bedingungen ein optimales C/I am Empfänger bewirkt und somit den Datendurchsatz bzw. die Reichweite der Vorrichtung zum Senden erhöht.

Fig. 4 zeigt ein Blockschaltbild einer Vorrichtung zum Senden gemäß einem weiteren Ausführungsbeispiel der vorliegenden Erfindung. Insbesondere zeigt Fig. 4 im Unterschied zu dem in

Fig. 3 gezeigten Ausführungsbeispiel eine alternative Ausführungsform mit einer gemeinsamen Leistungsbegrenzung (Clipping).

Im Unterschied zu der in Fig. 3 gezeigten Vorrichtung zum Senden, ist bei der in Fig. 4 gezeigten Vorrichtung zum Senden ein Kombinierer 208 zwischen den Leistungsreglern 104 und dem Begrenzer 106 angeordnet. Der Kombinierer 208 kann wiederum als Summierer ausgeführt sein, der die einzelnen Zwischenfrequenzsignale von den Leistungsreglern 104 empfängt, diese kombiniert und als Gesamtsignal an den Begrenzer 106 bereitstellt. Gemäß diesem Ausführungsbeispiel ist der Begrenzer 106 ausgebildet, um das von dem Kombinierer 208 empfangen Gesamtsignal in seiner Amplitude zu begrenzen und an den Digital-Analog-Wandler 110 bereitzustellen.

Fig. 5 zeigt ein Blockschaltbild einer Vorrichtung zum Senden gemäß einem weiteren Ausführungsbeispiel der vorliegenden Erfindung. Insbesondere zeigt Fig. 5 eine alternative Ausführungsform mit einer gemeinsamen Leistungsregelung und einer gemeinsamen Leistungsbegrenzung.

Im Unterschied zu der in Fig. 3 gezeigten Vorrichtung zum Senden, ist bei der im Fig. 5 gezeigten Vorrichtung zum Senden ein Kombinierer 308 zwischen der Modulationseinrichtung 102 und einem einzigen Leistungsregler 104 angeordnet. Der Kombinierer 308 kann wiederum als Addierer ausgeführt sein, der die von der Modulationseinrichtung 102 bereitgestellten Zwischenfrequenzsignale empfängt, kombiniert und als Gesamtsignal an den Leistungsregler 104 bereitstellen. Der Leistungsregler 104 ist ausgebildet, um die Sendeleistung des Gesamtsignals zu regeln bzw. einzustellen und das Gesamtsignal, dessen Sendeleistung geregelt bzw. eingestellt ist, an den Begrenzer 106 bereitzustellen.

Fig. 6 zeigt ein Blockschaltbild einer Vorrichtung zum Senden gemäß einem weiteren Ausführungsbeispiel der vorliegenden Erfindung. Insbesondere zeigt Fig. 6 eine alternative Ausführungsform mit festen Begrenzungsparametern.

Im Unterschied zu der in Fig. 4 gezeigten Vorrichtung zum Senden werden die Begrenzungsparameter gemäß dem in Fig. 6 gezeigten Ausführungsbeispiel nicht von der Überwachungseinheit 132 an die Begrenzungssteuerung 124 bereitgestellt. Vielmehr weist die Begrenzungsteuerung 124 bereits entsprechende Begrenzungsparameter auf. Die Begrenzungsparameter können vordefiniert sein. Daher ist es auch nicht erforderlich, dass diese Begrenzungsparameter in dem Speicher 134 gespeichert sind, wie es bei den vorangegangenen Ausführungsbeispielen der Fall sein kann.

Die vorliegende Erfindung wurde an Hand von Mobilfunk-Sendesystemen beschrieben, ist jedoch nicht auf solche Systeme begrenzt. Vielmehr kann der erfindungsgemäße Ansatz für alle Übertragungssysteme eingesetzt werden, in denen eine Anpassung eines Signals basierend auf variablen Übertragungsbedingungen erwünscht ist.

Fig. 9 zeigt anhand eines Flussdiagramms die Einstellung der Parameter MCS, Sendeleistung und Clipping-Parameter einer Mobilfunk-Sendeeinrichtung gemäß dem Stand der Technik. Darüberhinaus können noch weitere Sendeparameter einer Mobilfunk-Sendeeinrichtung eingestellt werden. Das MCS und die Sendeleistung werden in diesem Beispiel durch die Sendedatenparameter, z.B. die Service Class, Datenrate, Priorität bestimmt.

In die Einstellung der Parameter MCS, Bandbreite und Sendeleistung fließen ferner die Empfangsbedingungen in Form des Nutzsignal-Stör-Abstands C/I sowie Zellparameter einer Mobilfunkzelle wie die Zelllast L und die Sendeleistung in der Zelle ein. Wie in Fig. 9 erkennbar ist, werden die Clipping-Parameter unabhängig von den anderen Parametern aufgrund des gewählten PAR eingestellt.

Im Unterschied hierzu zeigen die Fig. 7 und 8 Flussdiagramme, bei denen bei der Einstellung von Parametern einer Mobilfunk-Sendeeinrichtung eine Optimierung gemäß der Erfindung erfolgt. Die Optimierung läuft in beiden dargestellten Abläufen identisch ab, lediglich die Eingabeparameter für die Optimierung sind unterschiedlich.

Eine Optimierung läuft wie folgt ab:

1. Zunächst wird eine minimal erforderliche Sendeleistung $P_{min}$ ermittelt, z.B. $P_{min}$ = Pakt $(C/I)_{MCS}/(C/I)_{akt}$ , wobei $C/I)_{akt}$ das bei der die aktuelle Sendeleistung $P_{akt}$ gemessene C/I und $(C/I)_{MCS}$ das zum aktuellen MCS gehörige C/I ist. Bei Bedarf können auch die Bandbreite und das MCS angepasst werden, solange die Datenrate erhalten bleibt und die Bandbreite verfügbar ist.
2. Anschließend wird eine EVM-Obergrenze für ein gegebenes C/I bestimmt. Diese Obergrenze kann durch die Abhängigkeit der Kurven 10 und 12 in den Figuren 1 und 2 ermittelt werden.
3. Dann wird die optimale Sendeleistung $P_{opt}$ durch einen funktionellen Zusammenhang aus $P_{min}$ und der EVM-Obergrenze unter Einbeziehung von der maximalen verfügbaren Spitzensendeleistung $P_{P,max}$ sowie Sendedaten- und Zellparametern ermittelt. Diese Funktion kann auch in einer Tabelle abgespeichert sein.
4. Schließlich wird das PAR aus der optimalen Sendeleistung $P_{opt}$) anhand einer Look-Up-Tabelle (LUT) oder einer Rechenvorschrift bestimmt.

Durch die Optimierung ergeben sich die Paramter MCS, Bandbreite, Sendeleistung und PAR, die entsprechend in der Mobilfunk-Sendeeinrichtung eingestellt werden.

Anstelle des Parameters $P_{min}$ kann auch ein anderer Parameter verwendet werden, der den Einstellungen für eine minimale erforderliche Performance entspricht. Ebenso kann für die EVM-Obergrenze ein Parameter gewählt werden, der die Einstellungen für eine optimale Performance repräsentiert.

In einer weiteren Ausführungsmöglichkeit können die für das Clipping relevanten Parameter auch direkt ohne die Verwendung von $P_{opt}$ und/oder PAR berechnet werden.

Bezugszeichen

| | |
|---|---|
| 10, 12 | Linie zur Verbindung der Maxima der C/I(EVM) Simulationskurven |
| 102 | Modulator |
| 104 | Leistungsregler |
| 106 | Begrenzer |
| 108 | Kombinierer |
| 110 | Digital-analog-Wandler |
| 112 | Aufwärtsmischer |
| 114 | Sendeverstärker |
| 122 | Leistungssteuerung |
| 124 | Begrenzersteuerung |
| 132 | Überwachungseinheit |
| 134 | Speicher |
| 136 | Verwaltungseinheit |
| 208 | Kombinierer |
| 208 | Kombinierer |
| 424 | Begrenzersteuerung |

**Patentansprüche**

**1.** Verfahren zum Senden eines Sendesignals, insbesondere eines Mobilfunksignals, an einen Empfänger, bei dem

das Sendesignal gemäß einem Modulations-Codierungs-Schema MCS verarbeitet und einer Amplitudenbegrenzung zum Erzielen eines Verhältnisses von maximaler zu mittlerer Sendeleistung PAR unterzogen wird, und bei dem ein Grenzwert EVM für einen Fehler des Sendesignals bedarfsgerecht an Übertragungsbedingungen für das Sendesignal angepasst wird.
wobei eine Übertragungsbedingung ein zu maximierender Nutzsignal-Stör-Abstand C/I am Empfänger bei einem fest vorgegebenem Spitzenwert-Rausch-Abstand PNR ist und der optimale Grenzwert für einen Fehler des Sendesignals EVM
wie folgt ermittelt wird:

a) Ermitteln der Abhängigkeit des Fehlers des Sendesignals EVM vom einem Verhältnis von maximaler zu mittlerer Sendeleistung PAR beim Sender,
b) Bestimmen des maximalen Nutzsignal-Stör-Abstands C/I am Empfänger und des dazugehörigen Fehlers des Sendesignals $EVM^2$. für einen beliebigen, festen Wert des Spitzenwert-Rausch-Abstands $PNR_{RX}$ am Empfänger,
c) Zuordnen des aus der Optimierung in b) erhaltenen Fehlers des Sendesignals $EVM^2$ als Grenzwert zum maximalen Nutzsignal-Stör-Abstand C/I am Empfänger , und
d) Wiederholen der Schritte b) und c) für verschiedene Werte des Spitzenwert-Rausch-Abstands $PNR_{RX}$.

**2.** Verfahren nach Anspruch 1,
**dadurch gekennzeichnet, dass**
die Auslastung einer Funkzelle mit einem Parameter Load L=0%...100% abgeschätzt wird, um entsprechende Maßnahmen für eine Zugangssteuerung, eine Überlaststeuerung oder eine Ablaufsteuerung zu entscheiden, und der Parameter Load verwendet wird, um den Grenzwert für einen Fehler $EVM_{TX}$ des Senders vorzugeben.

**3.** Verfahren nach Anspruch 2,
**dadurch gekennzeichnet, dass**
der Grenzwert für einen Fehler $EVM_{TX}$ des Senders sich gemäß der Formel

$$EVM_{TX} = EVM_{TX,0} + (EVM_{TX,100} - EVM_{TX,0}) \times (L / 100\%),$$

ergibt, wobei $EVM_{TX,0}$ und $EVM_{TX,100}$ für das zulässige EVM bei minimaler Last beziehungsweise maximaler Last stehen.

**4.** Vorrichtung zum Senden eines Sendesignals, insbesondere eines Mobilfunksignals, an einen Empfänger, umfassend

- einen Leistungsregler (104) zum Regeln einer Sendeleistung eines Zwischenfrequenzsignals abhängig von einem Leistungsparameter;
- einen Begrenzer (106) zum Begrenzen der Sendeleistung des Zwischenfrequenzsignals abhängig von einem Begrenzungsparameter, wobei aus dem Zwischenfrequenzsignal das Sendesignal erzeugbar ist;
- eine Überwachungseinheit (132), die ausgebildet ist, um gemäß einer Optimierungsvorschrift einen Grenzwert (EVM) für einen Fehler des Sendesignals abhängig von Übertragungsfaktoren zu bestimmen und aus dem Grenzwert zumindest den Leistungsparameter so zu bestimmen, dass das Sendesignal an den Grenzwert angepasst ist;

wobei eine Übertragungsbedingung ein zu maximierender Nutzsignal-Stör-Abstand C/I am Empfänger bei einem vorgegebenem Spitzenwert-Rausch-Abstand PNR ist; und
wobei die Überwachungseinheit (132) zum Bestimmen einer Abhängigkeit, des Quadrats des Grenzwertes $EVM^2$ von einem erforderlichen Nutzsignal-Stör-Abstand C/I ausgebildet ist, um in einem ersten Schritt eine Abhängigkeit des Quadrats des Grenzwertes von einem Verhältnis von maximaler zu mittlerer Sendeleistung $EVM^2$(CAR) bei der Vorrichtung zum Senden zu ermitteln, in einem zweiten Schritt einen maximalen Nutzsignal-Stör-Abstand C/I für einen vorgegebenen Spitzen-Rausch-Abstand-Wert am Empfänger
$PNR_{RX}$-Wert zu bestimmen, in einem dritten Schritt das Quadrat des Grenzwertes zum Signal-Rausch-Abstand aus der Bestimmung im zweiten Schritt zuzuordnen und in einem vierten Schritt den zweiten und dritten Schritt für verschiedene Spitzen-Rausch-Abstand-Werte am Empfänger zu wiederholen.

**5.** Vorrichtung gemäß Anspruch 4,

**dadurch gekennzeichnet, dass**
die Überwachungseinheit (132) ausgebildet ist, um neben dem Leistungsparameter auch den Begrenzungsparameter so zu bestimmen, dass das Sendesignal an den Grenzwert angepasst ist.

**6.** Vorrichtung gemäß einem der Ansprüche 4 oder 5,
**dadurch gekennzeichnet, dass**
die Vorrichtung zum Senden ferner einen Modulator (102) aufweist, der ausgebildet ist, um ein Basisbandsignal abhängig von einem Modulationsparameter zu modulieren und als das Zwischenfrequenzsignal bereitzustellen, wobei die Überwachungseinheit (132) ferner ausgebildet ist, um den Modulationsparameter aus dem Grenzwert (EVM) zu bestimmen.

**7.** Vorrichtung gemäß einem der Ansprüche 4 bis 6,
**dadurch gekennzeichnet, dass**
die Vorrichtung ferner einen Digital-Analog-Wandler (110), einen Aufwärtsmischer (112) und einen Sendeverstärker (114) aufweist, um das Sendesignal aus dem Zwischenfrequenzsignal zu erzeugen.

**8.** Vorrichtung gemäß einem der Ansprüche 4 bis 7,
**dadurch gekennzeichnet, dass**
die Optimierungsvorschrift darauf basiert, dass sich eine relative Fehlerenergie an dem Empfänger aus der Formel
$1/(C/I)_{min} > 1/(C/I) = 1/SNR_{RX} + EVM_{TX}^2$

$(C/I)_{min}$ : mindestens erforderlicher Nutzsignal-Stör- Abstand
C/I : Nutzsignal-Stör-Abstand
$SNR_{RX}$ : Signal-Rausch-Abstand am Empfänger
$EVM_{TX}$ : Grenzwert in der Vorrichtung zum Senden

ergibt und dass der Signal-Rausch-Abstand am Empfänger für Fehler, die nicht von der Vorrichtung zum Senden stammen, direkt mit einer mittleren Sendeleistung des Sendesignals skaliert.

**9.** Vorrichtung gemäß einem der Ansprüche 4 bis 8,
**dadurch gekennzeichnet, dass**
die mittlere Sendeleistung des Sendesignals einer der Übertragungsfaktoren ist, und die Optimierungsvorschrift eine Reduzierung des Grenzwerts EVM bei einer Reduzierung der mittleren Sendeleistung und eine Erhöhung des Grenzwerts bei einer Erhöhung der mittleren Sendeleistung bewirkt.

**10.** Vorrichtung gemäß Anspruch 9,
**dadurch gekennzeichnet, dass**
der Grenzwert EVM gemäß der Optimierungsvorschrift zum Erreichen eines maximalen Nutzsignal-Stör-Abstands bei einem vorgegebenen Spitzen-Rausch-Abstand gemäß der Formel

$$1/(C/I) = 1/SNR_{RX} + EVM^2 = PAR_{TX}/PNR_{RX} + EVM_{TX}^2$$

C/I : Nutzsignal-Stör-Abstands
$SNR_{RX}$ : Signal-Rausch-Abstand am Empfänger
$EVM_{TX}$ : Grenzwert in der Vorrichtung zum Senden
$PAR_{TX}$ : Verhältnis von maximaler zu mittlerer Sende- leistung
$PNR_{RX}$ : Spitzen-Rausch-Abstand am Empfänger

bestimmbar ist.

**11.** Vorrichtung gemäß einem der Ansprüche 4 bis 10,
**dadurch gekennzeichnet, dass**
die Überwachungseinheit (132) mit einem Speicher (134) gekoppelt ist, wobei der Speicher einen Zusammenhang zwischen einem Verhältnis von maximaler zu mittlere Sendeleistung PAR und dem Grenzwert für den maximal zulässigen Fehler des Sendesignals EVM sowie Werte für einen zugehörigen maximalen Nutzsignal-Stör-Abstand C/I aufweist.

**12.** Vorrichtung gemäß Anspruch 9,
**dadurch gekennzeichnet, dass**
der Speicher (134) ferner Begrenzungsparameter zum Bereitstellen an den Begrenzer (106) aufweist.

**13.** Vorrichtung gemäß einem der Ansprüche 4 bis 12,
**dadurch gekennzeichnet, dass**
die Vorrichtung eine Verwaltungseinheit (136) zur Abschätzung einer Auslastung einer Funkzelle, in der die Vorrichtung zum Senden angeordnet ist, aufweist, wobei die Auslastung ein Übertragungsfaktor ist und die Verwaltungseinheit (136) ausgebildet ist, um die Auslastung and die Überwachungseinheit (132) bereitzustellen.

**14.** Vorrichtung gemäß Anspruch 13,
**dadurch gekennzeichnet, dass**
der Grenzwert unter Einbeziehung der Formel

$$EVM_{TX} = EVM_{TX,0} + (EVM_{TX,100} - EVM_{TX,0}) \times (L / 100\%),$$

$EVM_{TX}$ : Grenzwert an der Vorrichtung zum Senden
$EVM_{TX,0}$ : zulässiger Grenzwert bei minimaler Last
$EVM_{TX,100}$ : zulässiger Grenzwert bei maximaler Last
L : Auslastung der Funkzelle

bestimmbar ist.

**15.** Vorrichtung gemäß einem der Ansprüche 6 bis 14,
**dadurch gekennzeichnet, dass**
der Modulator (102) ausgebildet ist, um eine Mehrzahl von Basisbandsignalen abhängig von einer Mehrzahl von Modulationsparametern zu modulieren und als eine Mehrzahl von Zwischenfrequenzsignalen bereitzustellen, wobei die Überwachungseinheit (132) ferner ausgebildet ist, um die Mehrzahl von Modulationsparametern aus dem Grenzwert (EVM) zu bestimmen.

**16.** Vorrichtung gemäß Anspruch 15,
**dadurch gekennzeichnet, dass**
die Vorrichtung einen Kombinierer (308) aufweist, der ausgebildet ist, um die Mehrzahl von Zwischenfrequenzsignalen zu kombinieren und als Zwischenfrequenzsignal an den Leistungsregler (104) bereitzustellen.

**17.** Vorrichtung gemäß Anspruch 15,
**dadurch gekennzeichnet, dass**
die Vorrichtung zum Senden eine Mehrzahl von Leistungsreglern zum Regeln jeweils einer Sendeleistung der Mehrzahl von Zwischenfrequenzsignalen abhängig von einer Mehrzahl von Leistungsparametern aufweist, wobei die Überwachungseinheit (132) ausgebildet ist, um aus dem Grenzwert die Mehrzahl von Leistungsparametern zu bestimmen.

**18.** Vorrichtung gemäß Anspruch 17,
**dadurch gekennzeichnet, dass**
die Vorrichtung einen Kombinierer (208) aufweist, der ausgebildet ist, um die Mehrzahl von Zwischenfrequenzsignalen zu kombinieren und als das Zwischenfrequenzsignal an den Begrenzer (106) bereitzustellen.

**19.** Vorrichtung gemäß Anspruch 18,
**dadurch gekennzeichnet, dass**
der Begrenzer (106) einen vordefinierten Begrenzungsparameter aufweist.

**20.** Vorrichtung gemäß Anspruch 19,
**dadurch gekennzeichnet, dass**
der Begrenzer (106) ausgebildet ist, um jeweils eine Sendeleistung der Mehrzahl von Zwischenfrequenzsignalen abhängig von einer Mehrzahl von Begrenzungsparametern zu begrenzen und eine Mehrzahl von Sendesignalen bereitzustellen.

## Claims

1. Method for transmission of a transmission signal, in particular of a mobile radio signal, to a receiver, in which the transmission signal is processed in accordance with a modulation coding scheme MCS and is subjected to amplitude limiting in order to achieve a ratio between the maximum and the average transmission power PAR, and in which a limit value EVM for an error in the transmission signal is matched as required to the transmission conditions for the transmission signal,
wherein one transmission condition is a carrier to interference ratio C/I to be maximized at the receiver for a fixed predetermined peak value to noise ratio PNR, and the optimum limit value for an error in the transmission signal EVM is determined as follows:

   a) determination of the relationship between the error in the transmission signal EVM and the predetermined ratio of the maximum to the average transmission power PAR in the transmitter,
   b) determination of the maximum carrier to interference ratio C/I at the receiver and of the associated error in the transmission signal $EVM^2$ for an undefined, fixed value of the peak value to noise ratio $PNR_{RX}$ at the receiver,
   c) association of the error in the transmission signal $EVM^2$ as obtained from the optimization in b) as a limit value for the maximum carrier to interference ratio C/I at the receiver, and
   d) repetition of steps b) and c) for different values of the peak value to noise ratio $PNR_{RX}$.

2. Method according to Claim 1, **characterized in that** the load level in a radio cell is estimated using a parameter load L=0%...100%, in order to decide on appropriate measures for access control, overload control or sequence control, and the parameter load is used in order to preset the limit value for an error $EVM_{TX}$ of the transmitter.

3. Method according to Claim 2, **characterized in that** the limit value for an error $EVM_{TX}$ of the transmitter is obtained using the formula:

$$EVM_{TX} = EVM_{TX,0} + (EVM_{TX,100} - EVM_{TX,0}) \times (L/100\%)$$

   where $EVM_{TX,0}$ and $EVM_{TX,100}$ represent the permissible EVM for a minimum load and maximum load, respectively.

4. Apparatus for transmission of a transmission signal, in particular of a mobile radio signal, to a receiver, comprising

   - a power regulator (104) for regulation of a transmission power of an intermediate frequency signal as a function of a power parameter;
   - a limiter (106) for limiting the transmission power of the intermediate frequency signal as a function of a limit parameter, wherein the transmission signal can be produced from the intermediate frequency signal;
   - a monitoring unit (132), which is designed to use an optimization rule to determine a limit value (EVM) for an error in the transmission signal as a function of transmission factors, and to determine at least the power parameter from the limit value such that the transmission signal is matched to the limit value; wherein one transmission condition is a carrier to interference ratio C/I to be maximized at the receiver for a predetermined peak value to noise ratio PNR; and
   wherein the monitoring unit (132) is designed to determine a relationship between the square of the limit value $EVM^2$ and a required carrier to interference ratio C/I, in order in a first step, to determine a relationship between the square of the limit value and the ratio of the maximum to the average transmission power $EVM^2$ (PAR) for the apparatus for transmission, in a second step, to determine a maximum carrier to interference ratio C/I for a predetermined peak to noise ratio value at the receiver $PNR_{RX}$ value, in a third step, to associate the square of the limit value with the signal to noise ratio from the determination in the second step and, in a fourth step, to repeat the second step and the third step for different peak to noise ratio values at the receiver.

5. Apparatus according to Claim 4, **characterized in that** the monitoring unit (132) is designed to determine not only the power parameter but also the limit parameter such that the transmission signal is matched to the limit value.

6. Apparatus according to one of Claims 4 or 5, **characterized in that** the apparatus for transmission furthermore has a modulator (102) which is designed to modulate a baseband signal as a function of a modulation parameter and to produce this as the intermediate frequency signal, wherein the monitoring unit (132) is also designed to determine the modulation parameter from the limit value (EVM).

7. Apparatus according to one of Claims 4 to 6, **characterized in that** the apparatus furthermore has a digital/analog converter (110), a step-up mixer (112) and a transmission amplifier (114), in order to produce the transmission signal from the intermediate frequency signal.

8. Apparatus according to one of Claims 4 to 7, **characterized in that** the optimization rule is based on the fact that a relative error energy at the receiver results from the formula:

$$1/(C/I)_{min} > 1/(C/I) = 1/SNR_{RX} + EVM_{TX}^2$$

$(C/I)_{min}$: minimum required carrier to interference ratio
C/I: carrier to interference ratio
$SNR_{RX}$: signal to noise ratio at the receiver
$EVM_{TX}$: limit value in the apparatus for transmission

and **in that** the signal to noise ratio at the receiver for errors which do not originate from the apparatus for transmission is scaled directly with an average transmission power of the transmission signal.

9. Apparatus according to one of Claims 4 to 8, **characterized in that** the average transmission power of the transmission signal is one of the transmission factors, and the optimization rule results in a reduction in the limit value EVM when the average transmission power is reduced and an increase in the limit value when the average transmission power is increased.

10. Apparatus according to Claim 9, **characterized in that** the limit value EVM can be determined in accordance with the optimization rule in order to achieve a maximum carrier to interference ratio for a predetermined peak to noise ratio using the formula:

$$1/(C/I) = 1/SNR_{RX} + EVM^2 = PAR_{TX}/PNR_{RX} + EVM_{TX}^2$$

C/I: carrier to interference ratio
$SNR_{RX}$: signal to noise ratio at the receiver
$EVM_{TX}$: limit value in the apparatus for transmission
$PAR_{TX}$: ratio of the maximum to the average transmission power
$PNR_{RX}$: peak to noise ratio at the receiver.

11. Apparatus according to one of Claims 4 to 10, **characterized in that** the monitoring unit (132) is coupled to a memory (134), with the memory having a relationship between a ratio of the maximum to the average transmission power PAR and the limit value for the maximum permissible error in the transmission signal EVM, as well as values for an associated maximum carrier to interference ratio C/I.

12. Apparatus according to Claim 9, **characterized in that** the memory (134) furthermore has limit parameters for provision to the limiter (106).

13. Apparatus according to one of Claims 4 to 12, **characterized in that** the apparatus has a management unit (136) for estimation of a load level of a radio cell in which the apparatus for transmission is arranged, with the load level being a transmission factor and with the management unit (136) designed to pass the load level to the monitoring unit (132).

14. Apparatus according to Claim 13, **characterized in that** the limit value can be determined by using of the formula:

$$EVM_{TX} = EVM_{TX,0} + (EVM_{TX,100} - EVM_{TX,0}) \text{ x } (L/100\%),$$

$EVM_{TX}$: limit value at the apparatus for transmission

$EVM_{TX,0}$: permissible limit value for minimum load
$EVM_{TX, 100}$: permissible limit value for maximum load
L: load level in the radio cell.

**15.** Apparatus according to one of Claims 6 to 14, **characterized in that** the modulator (102) is designed to modulate a plurality of baseband signals as a function of a plurality of modulation parameters and to produce them as a plurality of intermediate frequency signals, with the monitoring unit (132) also being designed to determine the plurality of modulation parameters from the limit value (EVM).

**16.** Apparatus according to Claim 15, **characterized in that** the apparatus has a combiner (308) which is designed to combine the plurality of intermediate frequency signals and to pass them as an intermediate frequency signal to the power regulator (104).

**17.** Apparatus according to Claim 15, **characterized in that** the apparatus for transmission has a plurality of power regulators for regulation of a respective transmission power of the plurality of intermediate frequency signals as a function of a plurality of power parameters, with the monitoring unit (132) being designed to determine the plurality of power parameters from the limit value.

**18.** Apparatus according to Claim 17, **characterized in that** the apparatus has a combiner (208) which is designed to combine the plurality of intermediate frequency signals and to pass them as the intermediate frequency signal to the limiter (106).

**19.** Apparatus according to Claim 18, **characterized in that** the limiter (106) has a predefined limit parameter.

**20.** Apparatus according to Claim 19, **characterized in that** the limiter (106) is designed to limit a respective transmission power of the plurality of intermediate frequency signals as a function of a plurality of limit parameters, and to pass on a plurality of transmission signals.

## Revendications

**1.** Procédé pour envoyer un signal d'émission, et plus particulièrement un signal radio mobile, à un récepteur, dans lequel

- le signal d'émission est traité selon un schéma de codage de modulation MCS et est soumis à une limitation d'amplitude pour obtenir un rapport entre puissance d'émission maximale et puissance d'émission moyenne PAR et
- une valeur limite EVM d'une erreur du signal d'émission est adaptée compte tenu des besoins à des conditions de transmission pour le signal d'émission,

une condition de transmission étant un écart signal utile/parasite à maximiser C/I au niveau du récepteur pour un écart valeur de pointe/bruit PNR fixement prédéterminé et la valeur limite optimale d'une erreur du signal d'émission EVM étant déterminée comme suit :

a) détermination de la dépendance de l'erreur du signal d'émission EVM par rapport à un rapport entre puissance d'émission maximale et puissance d'émission moyenne PAR au niveau de l'émetteur ;
b) détermination de l'écart signal utile/parasite C/I maximal au niveau du récepteur et de l'erreur associée du signal d'émission $EVM^2$ pour une valeur fixe quelconque de l'écart valeur de pointe/bruit $PNR_{RX}$ au niveau du récepteur ;
c) affectation de l'erreur du signal d'émission $EVM^2$ obtenue à partir de l'optimisation visée sous b) en tant que valeur limite à l'écart signal utile/parasite C/I maximal au niveau du récepteur et
d) répétition des étapes b) et c) pour différentes valeurs de l'écart valeur de pointe/bruit $PNR_{RX}$.

**2.** Procédé selon la revendication 1, **caractérisé en ce que** le taux d'utilisation d'une cellule radio est estimé avec une Parameter Load L = 0 % ... 100 % pour décider de mesures adéquates pour une commande d'accès, une commande de surcharge ou une commande de déroulement et la Parameter Load est utilisée pour prédéterminer la valeur limite d'une erreur $EVM_{TX}$ de l'émetteur.

**3.** Procédé selon la revendication 2, **caractérisé en ce que** la valeur limite d'une erreur $EVM_{TX}$ de l'émetteur résulte de la formule

$$EVM_{TX} = EVM_{TX,0} + (EVM_{TX,100} - EVM_{TX,0}) \times (L/100\%),$$

$EVM_{TX,0}$ et $EVM_{TX,100}$ représentant l'EVM admissible à charge minimale respectivement à charge maximale.

**4.** Dispositif pour envoyer un signal d'émission, et plus particulièrement un signal radio mobile, à un récepteur, comprenant :

- un régleur de puissance (104) pour régler une puissance d'émission d'un signal de fréquence intermédiaire en fonction d'un paramètre de puissance,
- un limiteur (106) pour limiter la puissance d'émission du signal de fréquence intermédiaire en fonction d'un paramètre de limitation, le signal d'émission pouvant être généré à partir du signal de fréquence intermédiaire,
- une unité de surveillance (132) qui est réalisée pour déterminer, conformément à une règle d'optimisation, une valeur limite (EVM) d'une erreur du signal d'émission en fonction de facteurs de transmission et pour déterminer au moins le paramètre de puissance à partir de la valeur limite de manière telle que le signal d'émission soit adapté à la valeur limite,

une condition de transmission étant un écart signal utile/parasite à maximiser C/I au niveau du récepteur pour un écart valeur de pointe/bruit PNR prédéterminé et l'unité de surveillance (132) étant réalisée pour déterminer une dépendance du carré de la valeur limite $EVM^2$ par rapport à un écart signal utile/parasite C/I requis pour, dans une première étape, déterminer une dépendance du carré de la valeur limite par rapport à un rapport entre puissance d'émission maximale et puissance d'émission moyenne $EVM^2$ (PAR) au niveau du dispositif d'émission, pour, dans une deuxième étape, déterminer un écart signal utile/parasite C/I maximal pour une valeur prédéterminée d'écart valeur de pointe/bruit au niveau du récepteur valeur $PNR_{RX}$, pour, dans une troisième étape, affecter le carré de la valeur limite à l'écart signal/bruit résultant de la détermination effectuée à la deuxième étape et pour, dans une quatrième étape, répéter la deuxième et la troisième étape pour différentes valeurs d'écart valeur de pointe/bruit au niveau du récepteur.

**5.** Dispositif selon la revendication 4, **caractérisé en ce que** l'unité de surveillance (132) est réalisée pour également déterminer, outre le paramètre de puissance, le paramètre de limitation de manière telle que le signal d'émission soit adapté à la valeur limite.

**6.** Dispositif selon l'une des revendications 4 ou 5, **caractérisé en ce que** le dispositif d'émission comporte, en outre, un modulateur (102) qui est réalisé pour moduler un signal de bande de base en fonction d'un paramètre de modulation et le mettre à disposition en tant que signal de fréquence intermédiaire, l'unité de surveillance (132) étant en outre réalisée pour déterminer le paramètre de modulation à partir de la valeur limite (EVM).

**7.** Dispositif selon l'une des revendications 4 à 6, **caractérisé en ce que** le dispositif comporte en outre un convertisseur numérique-analogique (110), un mélangeur de conversion vers le haut (112) et un amplificateur d'émission (114) pour générer le signal d'émission à partir du signal de fréquence intermédiaire.

**8.** Dispositif selon l'une des revendications 4 à 7, **caractérisé en ce que** la règle d'optimisation se base sur le fait qu'une énergie d'erreur relative au niveau du récepteur résulte de la formule

$$1/(C/I)_{min} > 1/(C/I) = 1/SNR_{RX} + EVM_{TX}^2$$

avec

$(C/I)_{min}$ : écart signal utile/parasite minimal requis
C/I : écart signal utile/parasite
$SNR_{RX}$ : écart signal/bruit au niveau du récepteur
$EVM_{TX}$ : valeur limite dans le dispositif d'émission

et **en ce que**, pour des erreurs qui ne proviennent pas du dispositif d'émission, l'écart signal/bruit au niveau du récepteur est mis directement à l'échelle avec une puissance d'émission moyenne du signal d'émission.

**9.** Dispositif selon l'une des revendications 4 à 8, **caractérisé en ce que** la puissance d'émission moyenne du signal d'émission est l'un des facteurs de transmission et la règle d'optimisation provoque une réduction de la valeur limite EVM lors d'une réduction de la puissance d'émission moyenne et une augmentation de la valeur limite lors d'une augmentation de la puissance d'émission moyenne.

**10.** Dispositif selon la revendication 9, **caractérisé en ce que** la valeur limite EVM peut être déterminée selon la règle d'optimisation pour obtenir un écart signal utile/parasite maximal pour un écart valeur de pointe/bruit prédéterminé d'après la formule

$$1/(C/I) = 1/SNR_{RX} + EVM^2 = PAR_{TX}/PNR_{RX} + EVM_{TX}^2$$

avec

C/I : écart signal utile/bruit
$SNR_{RX}$ : écart signal/bruit au niveau du récepteur
$EVM_{TX}$ : valeur limite dans le dispositif d'émission
$PAR_{TX}$ : rapport entre puissance d'émission maximale et puissance d'émission moyenne
$PNR_{RX}$ : écart valeur de pointe/bruit au niveau du récepteur.

**11.** Dispositif selon l'une des revendications 4 à 10, **caractérisé en ce que** l'unité de surveillance (132) est couplée à une mémoire (134), la mémoire présentant un rapport entre un rapport entre puissance d'émission maximale et puissance d'émission moyenne PAR et la valeur limite de l'erreur maximale admissible du signal d'émission EVM ainsi que des valeurs pour un écart signal utile/parasite C/I maximal associé.

**12.** Dispositif selon la revendication 9, **caractérisé en ce que** la mémoire (134) comporte, en outre, des paramètres de limitation à mettre à disposition au limiteur (106).

**13.** Dispositif selon l'une des revendications 4 à 12, **caractérisé en ce que** le dispositif comporte une unité d'administration (136) pour estimer un taux d'utilisation d'une cellule radio dans laquelle se trouve le dispositif d'émission, le taux d'utilisation étant un facteur de transmission et l'unité d'administration (136) étant réalisée pour fournir le taux d'utilisation à l'unité de surveillance (132).

**14.** Dispositif selon la revendication 13, **caractérisé en ce que** la valeur seuil peut être déterminée à l'aide de la formule

$$EVM_{TX} = EVM_{TX,0} + (EVM_{TX,100} - EVM_{TX,0}) \times (L/100\%)$$

avec

$EVM_{TX}$ : valeur limite dans le dispositif d'émission,
$EVM_{TX,0}$ : valeur limite admissible à charge minimale,
$EVM_{TX,100}$ : valeur limite admissible à charge maximale,
L : taux d'utilisation de la cellule radio.

**15.** Dispositif selon l'une des revendications 6 à 14, **caractérisé en ce que** le modulateur (102) est réalisé pour moduler une pluralité de signaux de bande de base en fonction d'une pluralité de paramètres de modulation et la mettre à disposition en tant que pluralité de signaux de fréquence intermédiaire, l'unité de surveillance (132) étant en outre réalisée pour déterminer la pluralité de paramètres de modulation à partir de la valeur limite (EVM).

**16.** Dispositif selon la revendication 15, **caractérisé en ce que** le dispositif comporte un combineur (308) qui est réalisé pour combiner la pluralité de signaux de fréquence intermédiaire et la mettre à la disposition du régleur de puissance (104) tant que signal de fréquence intermédiaire.

**17.** Dispositif selon la revendication 15, **caractérisé en ce que** le dispositif d'émission comporte une pluralité de régleurs de puissance pour régler respectivement une puissance d'émission de la pluralité de signaux de fréquence intermédiaire en fonction d'une pluralité de paramètres de puissance, l'unité de surveillance (132) étant réalisée pour déterminer la pluralité de paramètres de puissance à partir de la valeur limite.

**18.** Dispositif selon la revendication 17, **caractérisé en ce que** le dispositif comporte un combineur (208) qui est réalisé pour combiner la pluralité de signaux de fréquence intermédiaire et la mettre à la disposition du limiteur (106) en tant que signal de fréquence intermédiaire.

**19.** Dispositif selon la revendication 18, **caractérisé en ce que** le limiteur (106) comporte un paramètre de limitation prédéterminé.

**20.** Dispositif selon la revendication 19, **caractérisé en ce que** le limiteur (106) est réalisé pour limiter respectivement une puissance d'émission de la pluralité de signaux de fréquence intermédiaire en fonction d'une pluralité de paramètres de limitation et mettre à disposition une pluralité de signaux d'émission.

FIG 1

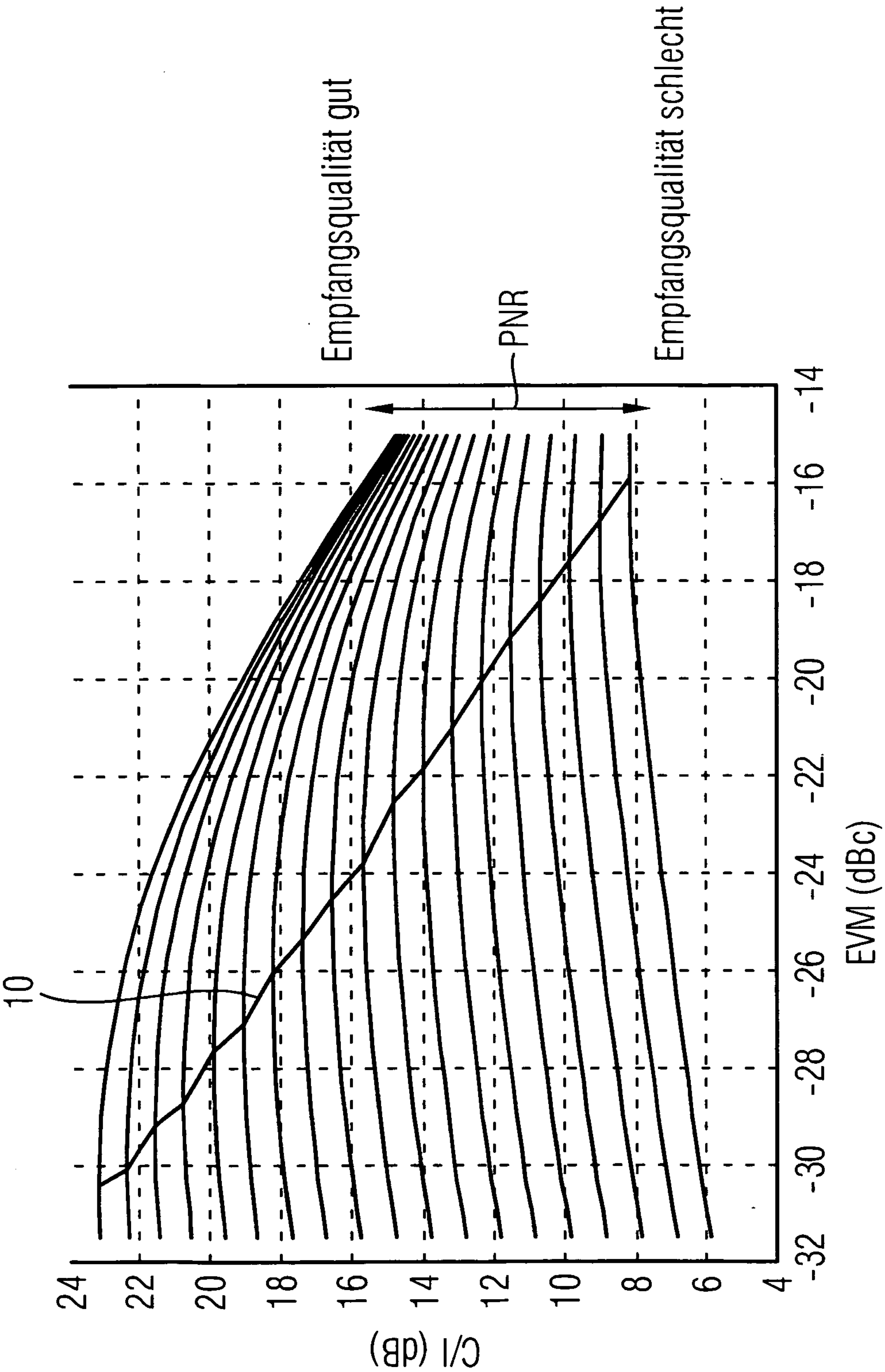
Empfangsqualität gut
PNR
Empfangsqualität schlecht
10
C/I (dB)
24
22
20
18
16
14
12
10
8
6
4
-32
-30
-28
-26
-24
-22
-20
-18
-16
-14
EVM (dBc)

FIG 2

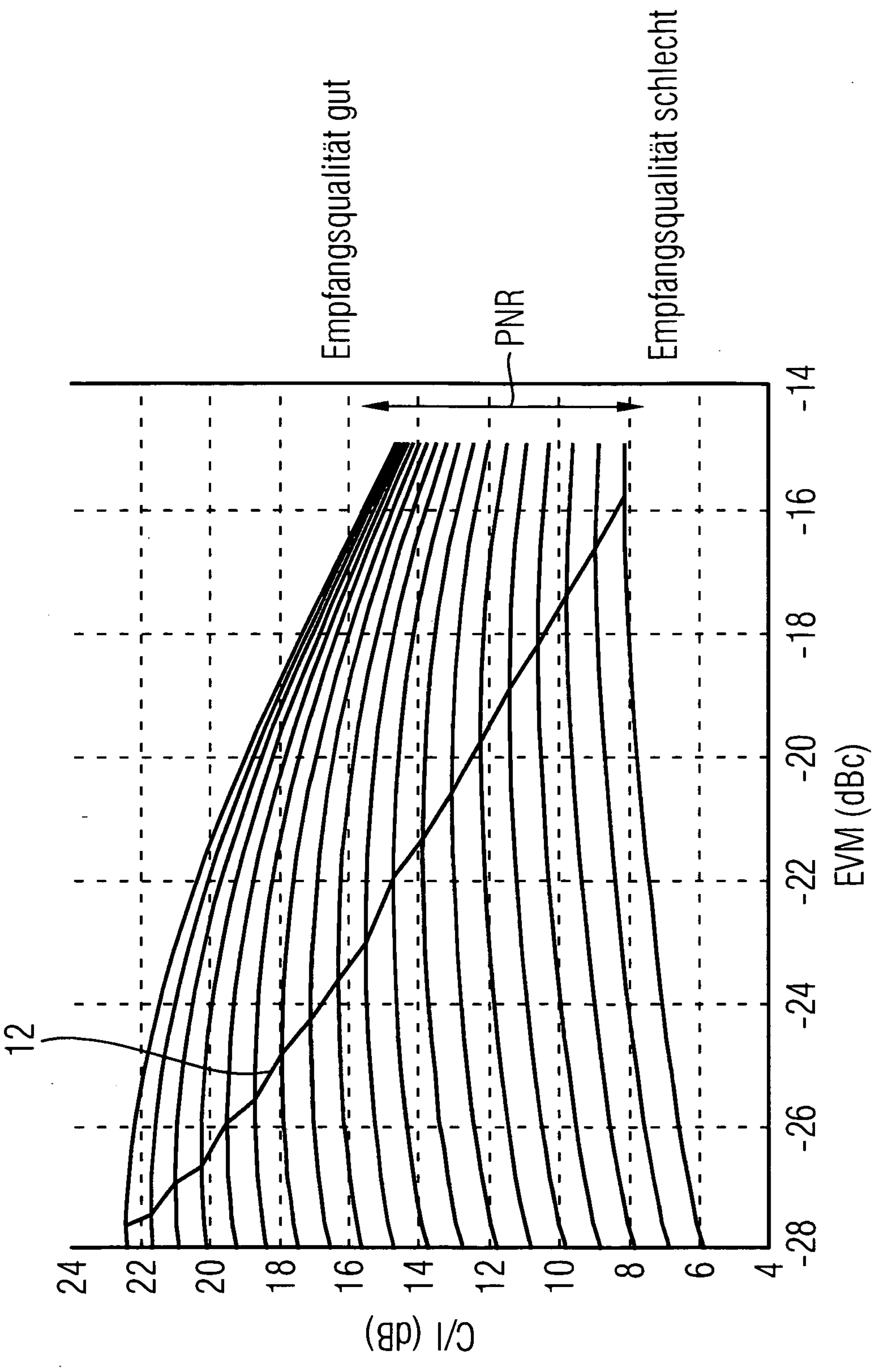

12
Empfangsqualität gut
PNR
Empfangsqualität schlecht
C/I (dB)
24
22
20
18
16
14
12
10
8
6
4
-28
-26
-24
-22
-20
-18
-16
-14
EVM (dBc)

FIG 3

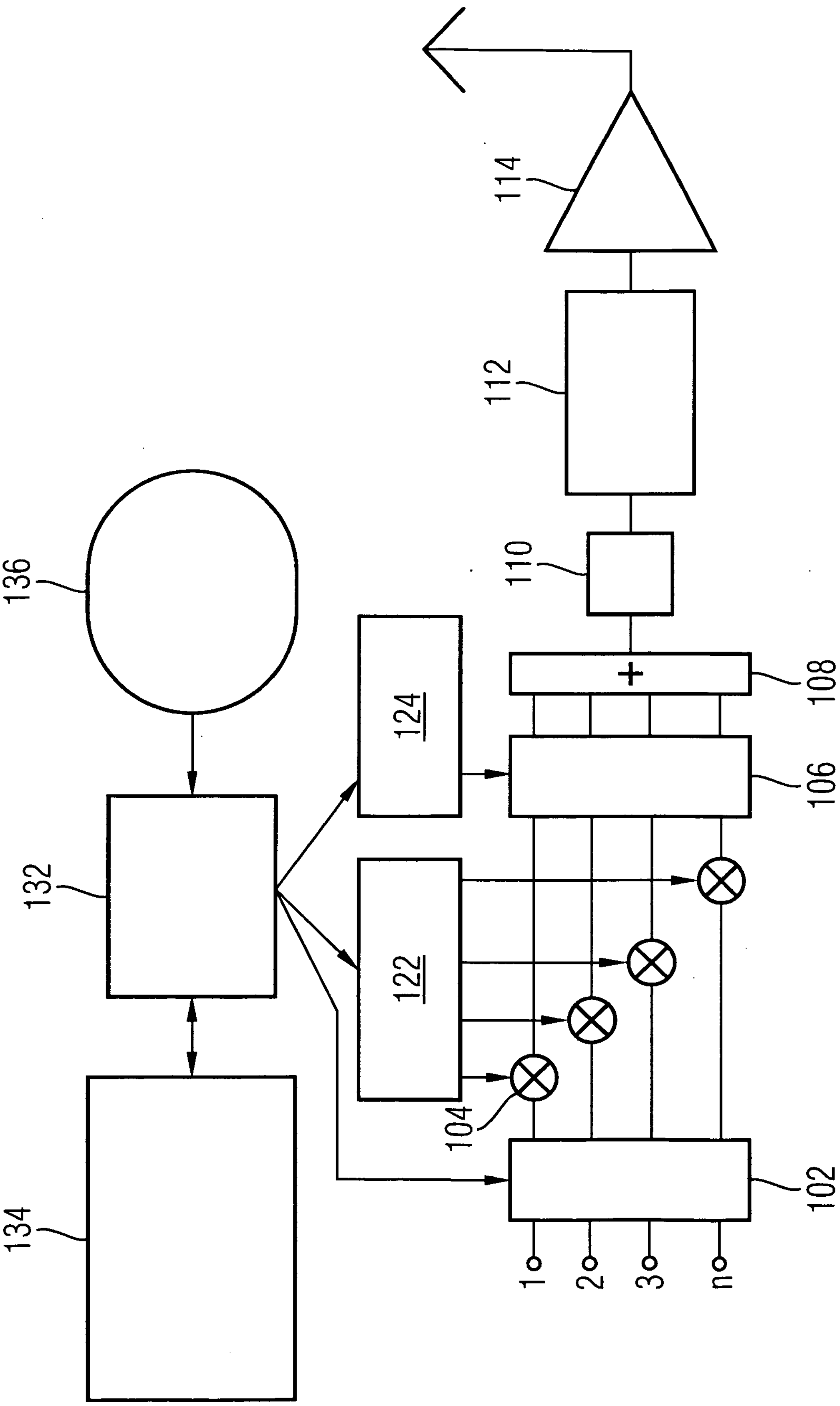

FIG 4

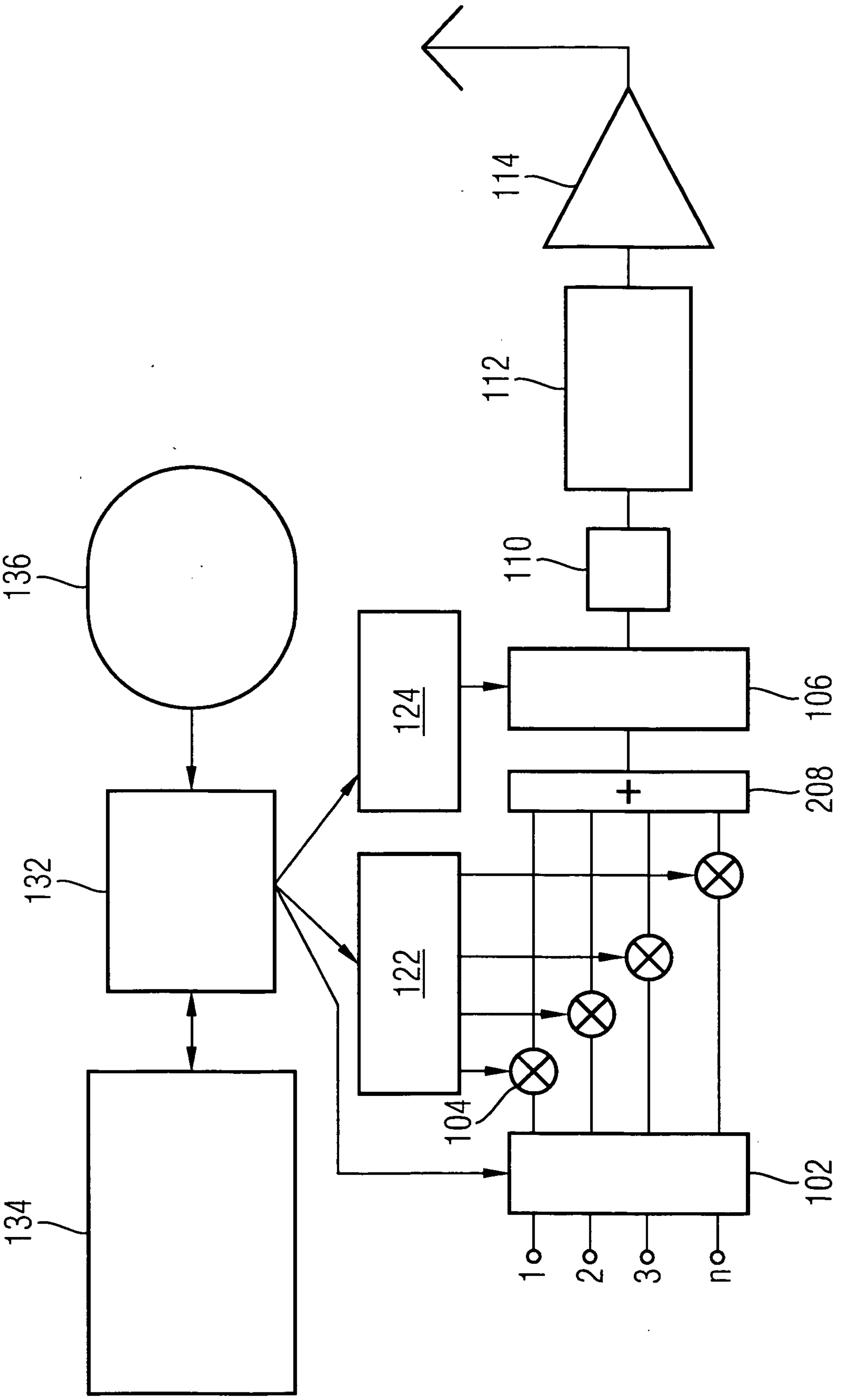

FIG 5

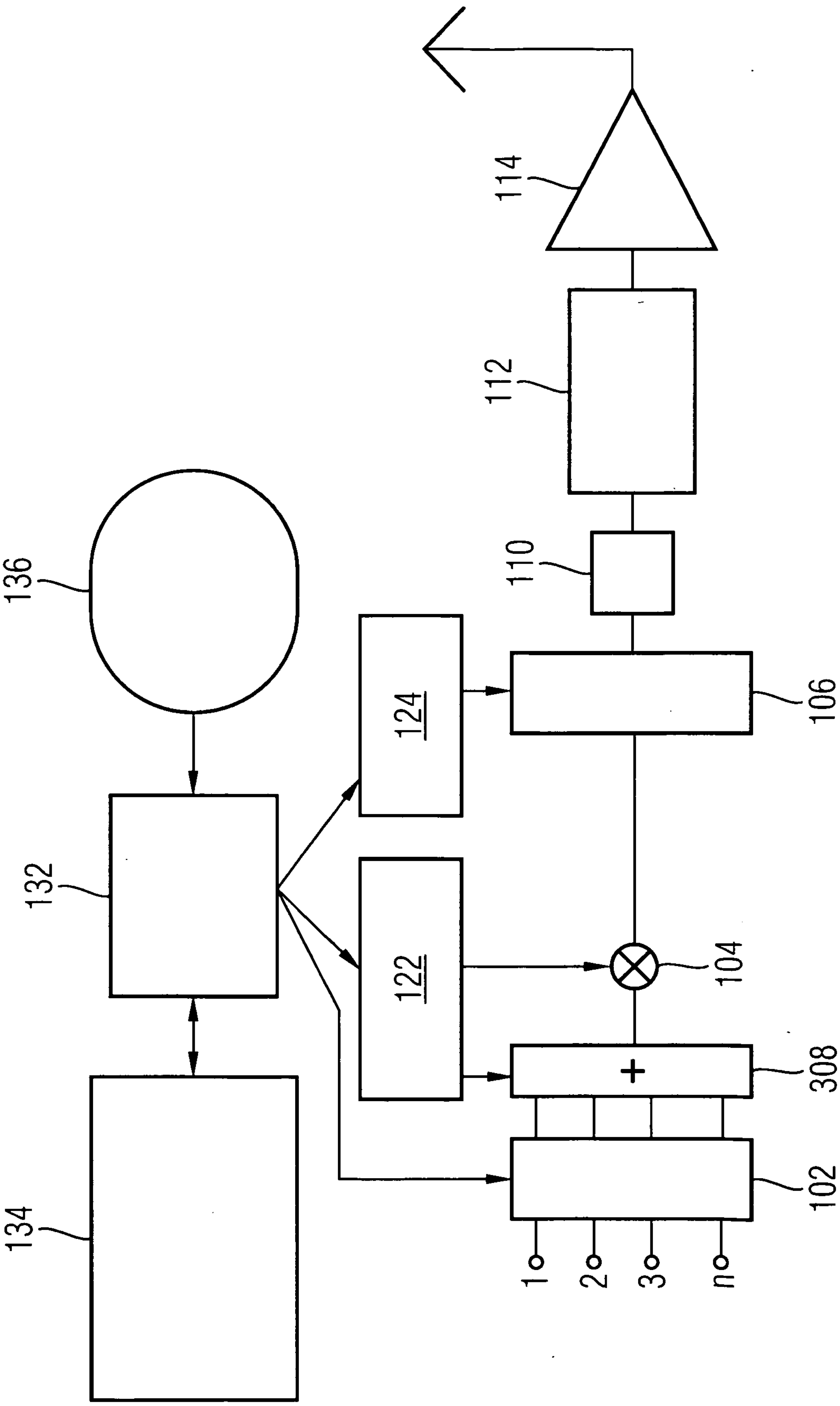

FIG 6

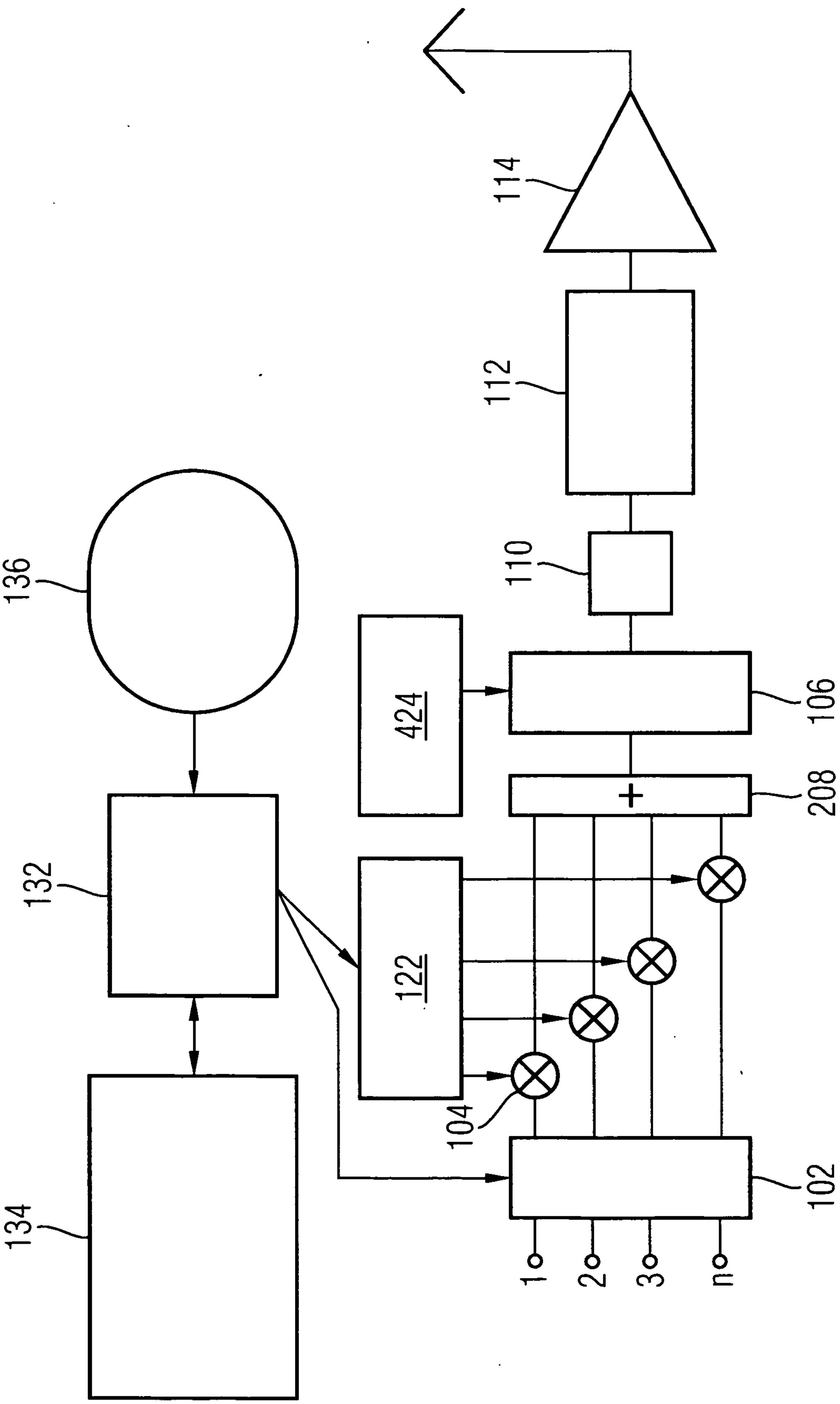

FIG 7

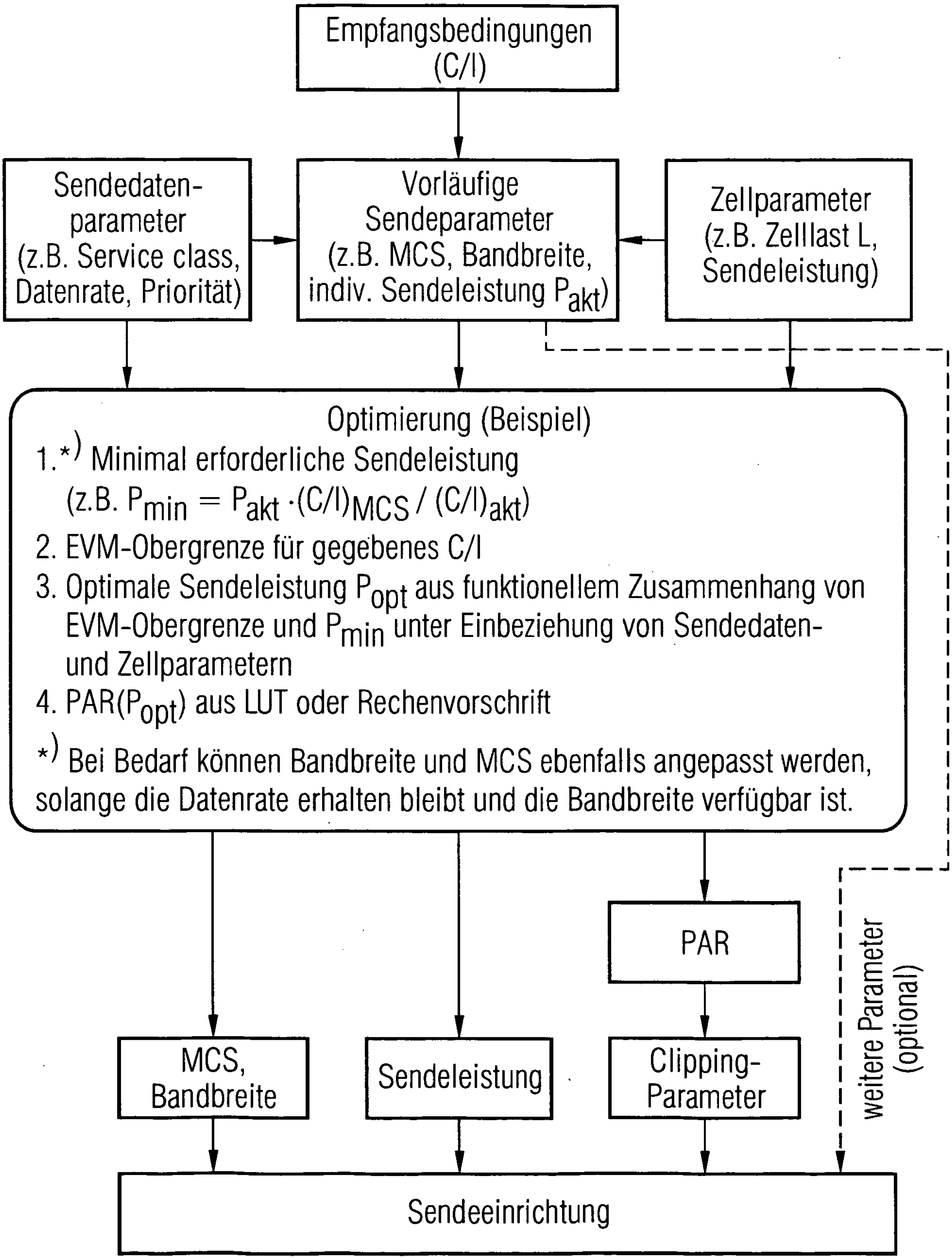
Empfangsbedingungen (C/I)
Sendedaten-parameter (z.B. Service class, Datenrate, Priorität)
Vorläufige Sendeparameter (z.B. MCS, Bandbreite, indiv. Sendeleistung $P_{akt}$)
Zellparameter (z.B. Zelllast L, Sendeleistung)
Optimierung (Beispiel)
1.*) Minimal erforderliche Sendeleistung (z.B. $P_{min} = P_{akt} \cdot (C/I)_{MCS} / (C/I)_{akt}$)
2. EVM-Obergrenze für gegebenes C/I
3. Optimale Sendeleistung $P_{opt}$ aus funktionellem Zusammenhang von EVM-Obergrenze und $P_{min}$ unter Einbeziehung von Sendedaten- und Zellparametern
4. PAR($P_{opt}$) aus LUT oder Rechenvorschrift
*) Bei Bedarf können Bandbreite und MCS ebenfalls angepasst werden, solange die Datenrate erhalten bleibt und die Bandbreite verfügbar ist.
PAR
MCS, Bandbreite
Sendeleistung
Clipping-Parameter
weitere Parameter (optional)
Sendeeinrichtung

FIG 8

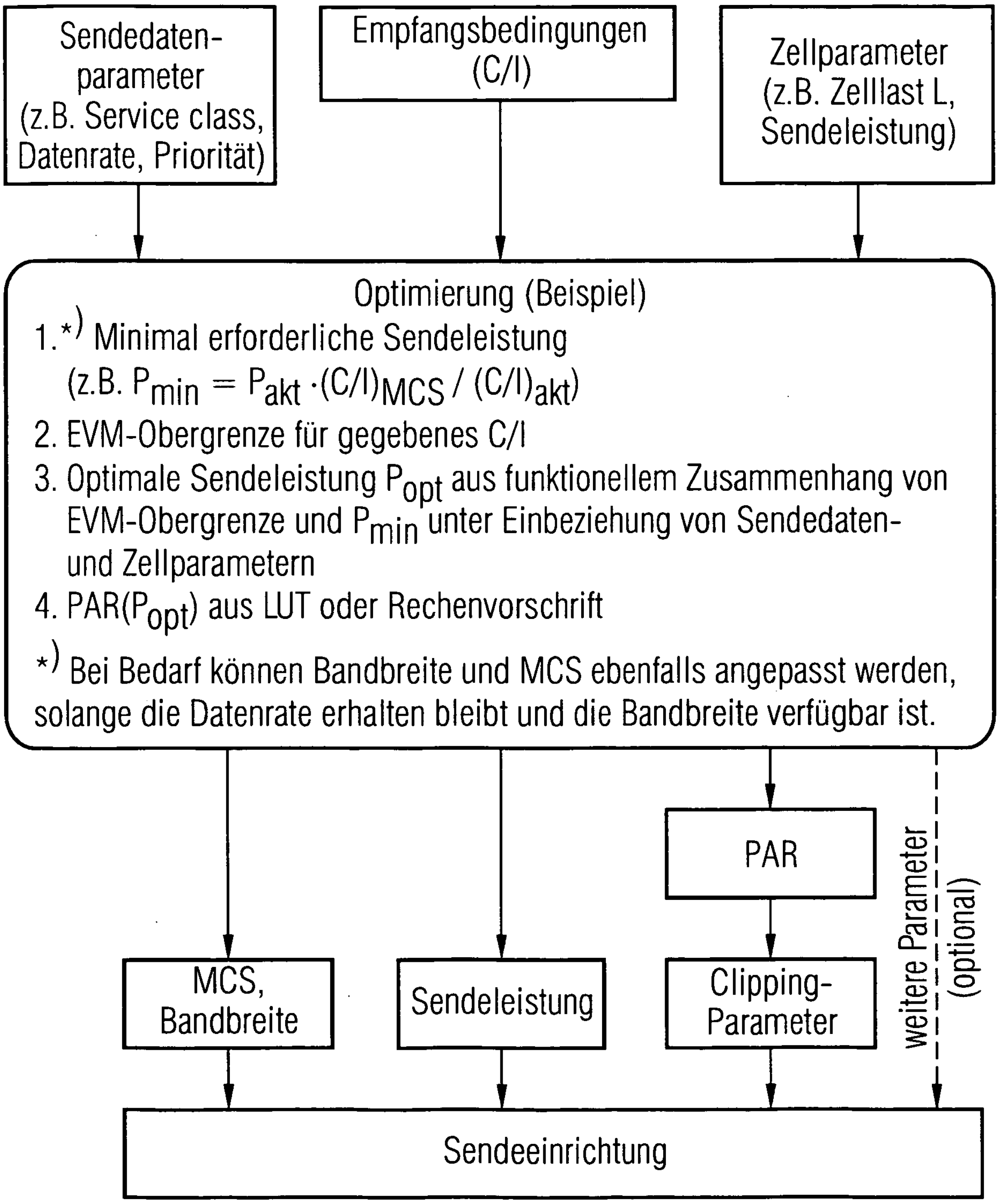
Sendedaten-
parameter
(z.B. Service class,
Datenrate, Priorität)
Empfangsbedingungen
(C/I)
Zellparameter
(z.B. Zelllast L,
Sendeleistung)
Optimierung (Beispiel)
1.*) Minimal erforderliche Sendeleistung
(z.B. $P_{min} = P_{akt} \cdot (C/I)_{MCS} / (C/I)_{akt}$)
2. EVM-Obergrenze für gegebenes C/I
3. Optimale Sendeleistung $P_{opt}$ aus funktionellem Zusammenhang von
EVM-Obergrenze und $P_{min}$ unter Einbeziehung von Sendedaten-
und Zellparametern
4. PAR($P_{opt}$) aus LUT oder Rechenvorschrift
*) Bei Bedarf können Bandbreite und MCS ebenfalls angepasst werden,
solange die Datenrate erhalten bleibt und die Bandbreite verfügbar ist.
PAR
weitere Parameter
(optional)
MCS,
Bandbreite
Sendeleistung
Clipping-
Parameter
Sendeeinrichtung

FIG 9
Stand der Technik

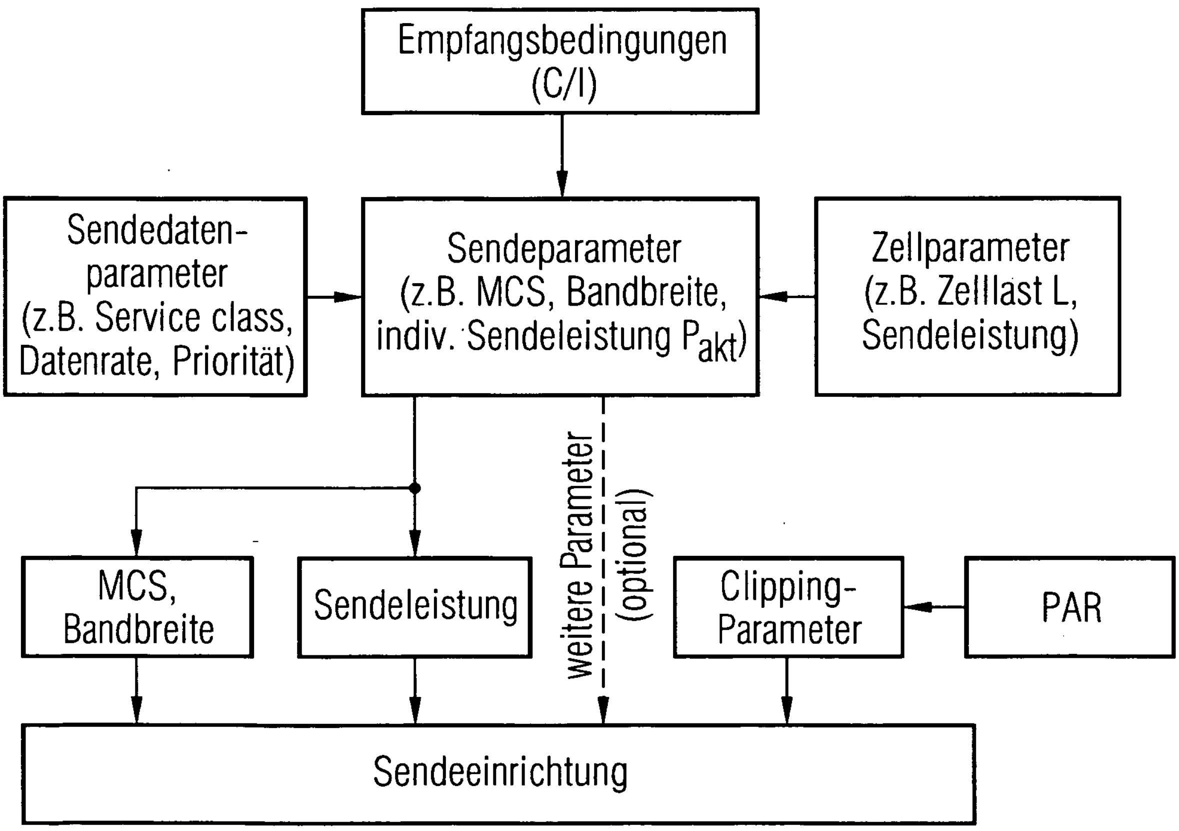

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10219318 A1
- WO 2004006464 A1
- US 6038261 A